# EUROPÄISCHE PATENTANMELDUNG

(11) **EP 3 355 548 A1**
(43) Veröffentlichungstag der Anmeldung: **01.08.2018**
(21) Anmeldenummer: 18154265.5
(22) Anmeldetag: 30.01.2018
(51) Int. Cl.: H04L 29/06, H04W 12/06

(54) **VERFAHREN UND SYSTEM ZUR AUTHENTISIERUNG EINES BENUTZERS**

(30) Priorität: 31.01.2017 DE 102017101906
(71) Anmelder: Systola GmbH, 21035 Hamburg (DE)
(72) Erfinder: KUZNETSOV, Roman, 21029 Hamburg (RU); KOVALENKO, Kyrylo, 21035 Hamburg (UA)
(74) Vertreter: Horn Kleimann Waitzhofer Patentanwälte PartG mbB

(57) **Zusammenfassung**

Vorgeschlagen wird ein Verfahren zur Authentisierung eines Benutzers gegenüber einer Zielserver-Einheit (20), die mit einer zentralen Benutzerverwaltung (10) gekoppelt ist und mindestens ein zertifikatbasiertes Authentisierungsverfahren unterstützt, umfassend: Einlesen von Anmeldedaten des Benutzers durch eine Client-Einheit (40), wobei die Anmeldedaten eine Benutzerkennung und mehrere Faktoren umfassen, Übertragen der eingelesen Anmeldedaten von der Client-Einheit (40) an eine Mehrfaktor-Einheit (30), Verifizieren der übertragenen Anmeldedaten durch die Mehrfaktor-Einheit (30), Anfordern eines Zertifikats durch die Mehrfaktor-Einheit (30) bei der zentralen Benutzerverwaltung (10) im Falle des erfolgreichen Verifizierens der Anmeldedaten, Empfangen des angeforderten Zertifikats von der zentralen Benutzerverwaltung (10) durch die Mehrfaktor-Einheit (30), Speichern eines dem Zertifikat zugeordneten privaten Schlüssels in der Mehrfaktor-Einheit (30), Übertragen des Zertifikats von der Mehrfaktor-Einheit (30) an die Client-Einheit (40) und Authentisieren des Benutzers gegenüber der Zielserver-Einheit (20) unter Verwendung des in der Client-Einheit (40) vorhandenen Zertifikats und des in der Mehrfaktor-Einheit (30) gespeicherten privaten Schlüssels.

## Beschreibung

Die vorliegende Erfindung betrifft ein Verfahren zur Authentisierung eines Benutzers gegenüber einer Zielserver-Einheit, die mit einer zentralen Benutzerverwaltung gekoppelt ist, wobei die Zielserver-Einheit und die zentrale Benutzerverwaltung mindestens ein zertifikatbasiertes Authentisierungsverfahren unterstützen. Des Weiteren betrifft die vorliegende Erfindung ein System und ein Computerprogrammprodukt zur Authentisierung eines Benutzers.

Das technische Gebiet der vorliegenden Erfindung betrifft Netzwerke, insbesondere mehrbenutzerfähige Netzwerke, wie Computernetzwerke in Unternehmen, Universitäten, Behörden und anderen Organisationen.

Ein mehrbenutzerfähiges Netzwerk erfordert eine Authentisierung zum Nachweis der Identität eines Benutzers, bevor dem Benutzer Zugriff auf eine in dem mehrbenutzerfähigen Netzwerk von einer Zielserver-Einheit bereitgestellte Netzwerkressource gewährt wird.

Bekannt sind Verfahren zur kennwortbasierten Authentisierung, bei welchen der Benutzer eine Benutzerkennung sowie ein geheimes Kennwort eingibt, um seine Identität nachzuweisen, und das Kennwort mit einem in einer zentralen Benutzerverwaltung gespeicherten Benutzerverzeichnis hinterlegten Kennwort verglichen wird. Verfahren mit kennwortbasierter Authentisierung sind aufgrund mangelnder Sicherheit nachteilig, da das Kennwort beispielsweise vom Benutzer versehentlich preisgegeben, durch einen Wörterbuchangriff ermittelt oder während der Übertragung über das Netzwerk mitgehört werden kann.

Bekannt sind ferner Verfahren zur zertifikatbasierten Authentisierung, bei welchen über das Netzwerk lediglich ein Zertifikat, das einen öffentlichen Teil eines asymmetrischen Schlüsselpaars umfasst, übertragen wird, wobei zum Nachweisen der Identität des Benutzers eine kryptographische Operation unter Verwendung eines privaten Schlüssels des asymmetrischen Schlüsselpaars durchgeführt wird, wobei der private Schlüssel nicht über das Netzwerk übertragen wird. Solche Verfahren vermindern das Risiko eines Mithörens geheimer Informationen bei der Übertragung im Netzwerk. Der private Schlüssel ist jedoch im Verantwortungsbereich des Benutzers gespeichert und daher weiterhin der unfreiwilligen Preisgabe etwa durch Ausspionieren mittels Schadsoftware ausgesetzt. Diesem Problem wird herkömmlich begegnet, indem das Zertifikat und der private Schlüssel auf einer Smartcard abgelegt werden, welche die kryptographische Operation durchführt und ein Auslesen des in ihr abgelegten privaten Schlüssels unterbindet. Smartcardbasierte Authentisierungsverfahren werfen jedoch hohe Kosten auf, da für jeden Benutzer ein Smartcard-Lesegerät und eine Smartcard angeschafft werden müssen.

Unternehmen und andere Organisationen haben Bedarf an verbesserten Authentisierungsverfahren gemäß ihren jeweiligen Sicherheitsanforderungen. Bei kommerziell verfügbaren Client- und Zielserver-Einheiten, die mit einem nicht quelloffenen Betriebssystem implementiert sind, ist die Auswahl der verwendbaren Authentisierungsverfahren jedoch auf die vom Anbieter des Betriebssystems vorgesehene Auswahl an Authentisierungsverfahren eingeschränkt.

Vor diesem Hintergrund liegt der vorliegenden Erfindung als Aufgabe zugrunde, die Authentisierung eines Benutzers gegenüber einer Zielserver-Einheit zu verbessern.

Gemäß einem ersten Aspekt wird ein Verfahren zur Authentisierung eines Benutzers gegenüber einer Zielserver-Einheit vorgeschlagen. Die Zielserver-Einheit ist mit einer zentralen Benutzerverwaltung gekoppelt, wobei die Zielserver-Einheit und die zentrale Benutzerverwaltung mindestens ein zertifikatbasiertes Authentisierungsverfahren unterstützen. Das Verfahren umfasst die folgenden Schritte:
a) Einlesen von Anmeldedaten des Benutzers durch eine Client-Einheit, wobei die Anmeldedaten eine Benutzerkennung und mehrere Faktoren umfassen,
b) Übertragen der eingelesen Anmeldedaten von der Client-Einheit an eine Mehrfaktor-Einheit,
c) Verifizieren der übertragenen Anmeldedaten durch die Mehrfaktor-Einheit,
d) Anfordern eines Zertifikats durch die Mehrfaktor-Einheit bei der zentralen Benutzerverwaltung im Falle des erfolgreichen Verifizierens der Anmeldedaten,
e) Empfangen des angeforderten Zertifikats von der zentralen Benutzerverwaltung durch die Mehrfaktor-Einheit,
f) Speichern eines dem Zertifikat zugeordneten privaten Schlüssels in der Mehrfaktor-Einheit,
g) Übertragen des Zertifikats von der Mehrfaktor-Einheit an die Client-Einheit, und
h) Authentisieren des Benutzers gegenüber der Zielserver-Einheit unter Verwendung des in der Client-Einheit vorhandenen Zertifikats und des in der Mehrfaktor-Einheit gespeicherten privaten Schlüssels.

Unter Authentisierung bzw. Authentisieren ist ein Vorgang zu verstehen, bei dem ein Benutzer gegenüber einer lokalen oder entfernten Einheit seine Identität nachweist und die Identität des Benutzers überprüft wird.

Unter Identität ist dabei der Sachverhalt zu verstehen, dass es sich bei dem Benutzer tatsächlich um denjenigen Benutzer handelt, dem eine von dem Benutzer durch Eingabe oder Auswahl bereitgestellte Benutzerkennung zugeordnet ist.

Bei einer Benutzerkennung handelt es sich um Daten, welche einen Benutzer eindeutig bezeichnen, beispielsweise um eine Ganzzahl oder eine alphanumerische Zeichenfolge. Beispiele für eine Benutzerkennung sind ein Benutzername wie "john.doe", eine Benutzernummer wie "1000" oder ein Windows Security Identifier (SID) wie "S-1-5-21-515967899-920026266-1708537768-1000".

Unter einer Client-Einheit ist eine Einheit zu verstehen, die die Identität eines Benutzers gegenüber einer Zielserver-Einheit nachweist, um den Benutzer zu authentisieren und dadurch dem Benutzer den Zugriff auf eine von der Zielserver-Einheit bereitgestellte Ressource zu ermöglichen, und die insbesondere mindestens einen der Schritte gemäß dem vorgeschlagenen Verfahren ausführt.

Unter einer Zielserver-Einheit ist eine Einheit zu verstehen, die einem authentisierten Benutzer Zugriff auf eine Ressource bereitstellt, wobei die Zielserver-Einheit zum Authentisieren des Benutzers an eine zentralen Benutzerverwaltung gekoppelt ist. Unter "gekoppelt" ist zu verstehen, dass die Zielserver-Einheit beispielsweise mit der zentralen Benutzerverwaltung kommunizieren kann und insbesondere derart konfiguriert ist, dass sie sich in einer Vertrauensstellung mit Einheiten der zentralen Benutzerverwaltung befindet.

Bei einer Ressource kann es sich beispielsweise um einen Dateiserver-Dienst, der auf einem Server-Computer gespeicherte Dateien bereitstellt, um einen Webbasierten Dienst, der eine Anwendung über das HTTP-Protokoll bereitstellt, um einen lokalen Dienst, der die lokale Anmeldung an einer lokalen interaktiven Sitzung bereitstellt, oder um einen Remote-Desktop-Dienst handeln, der die entfernte Anmeldung an einer auf einem Server-Computer ausgeführten interaktiven Sitzung bereitstellt.

Unter einer zentralen Benutzerverwaltung ist eine Einheit zu verstehen, die insbesondere ein Benutzerverzeichnis, eine Zertifizierungsstelle sowie Funktionalität zum Authentisieren eines Benutzers bereitstellt. Das Benutzerverzeichnis umfasst insbesondere Benutzerdatensätze, wobei jeder Benutzerdatensatz insbesondere eine Benutzerkennung und weitere mit der Benutzerkennung verknüpfte Daten umfasst. Ein Beispiel für eine zentrale Benutzerverwaltung ist eine Windows Domänen-Infrastruktur, die die Microsoft Active Domain Services (Domänendienste) implementiert.

Ein Zertifikat ist ein Datensatz, der insbesondere einen öffentlichen Schlüssel eines asymmetrischen kryptographischen Schlüsselpaars oder Public-Private-Schlüsselpaars, eine durch eine Zertifizierungsstelle erstellte kryptographische Signatur des öffentlichen Schlüssels und Metadaten umfasst. Die Metadaten, die Signatur der Zertifizierungsstelle und der öffentliche Schlüssel bilden einen öffentlichen Abschnitt des Zertifikats. Die Metadaten umfassen insbesondere eine Benutzerkennung und können weitere Angaben, wie beispielsweise Angaben zur Gültigkeitsdauer des Zertifikats, umfassen. Der private Schlüssel, der zusammen mit dem öffentlichen Schlüssel eines Zertifikats ein asymmetrisches kryptographisches Schlüsselpaar oder Public-Private-Schlüsselpaar bildet, wird auch als dem Zertifikat zugeordneter privater Schlüssel bezeichnet. Somit bilden ein von einem Zertifikat umfasster öffentlicher Schlüssel und ein dem Zertifikat zugeordneter privater Schlüssel ein kryptographisches Public-Private-Schlüsselpaar aus.

Bei einer Zertifizierungsstelle handelt es sich um eine Einheit, in der ein Stammzertifikat, d.h. ein der Zertifizierungsstelle zugeordnetes Zertifikat, und ein dem Stammzertifikat zugeordneter privater Schlüssel gespeichert sind. Der dem Stammzertifikat zugeordnete private Schlüssel ist nur der Zertifizierungsstelle bekannt. Das Stammzertifikat ist anderen Einheiten bekannt, die sich in einer Vertrauensstellung mit der Zertifizierungsstelle befinden, insbesondere der zentralen Benutzerverwaltung und beispielsweise auch der Zielserver-Einheit. Diese Einheiten sind dazu eingerichtet, Zertifikate, die von der Zertifizierungsstelle unter Verwendung ihres privaten Schlüssels mit einer Signatur versehen sind, zu überprüfen und als gültig zu erkennen. Dazu führen diese Einheiten jeweils eine kryptographische Operation durch, um anhand des ihnen bekannten öffentlichen Schlüssels aus dem Stammzertifikat die Signatur eines zu überprüfenden Zertifikats zu überprüfen.

Ein zertifikatbasiertes Authentisierungsverfahren ist ein kryptographisches Verfahren, bei dem die Authentisierung eines Benutzers anhand eines Zertifikats erfolgt. Insbesondere übermittelt eine Client-Einheit ein Zertifikat, und die Zielserver-Einheit überprüft durch Kommunizieren mit der Client-Einheit und mit der zentralen Benutzerverwaltung, ob die Client-Einheit den dem Zertifikat zugeordneten privaten Schlüssel zum Durchführen kryptographischer Operationen nutzen kann, wodurch die Identität des Benutzers verifiziert wird, ohne dass der private Schlüssel über das Netzwerk übertragen wird. Ein zertifikatbasiertes Authentisierungsverfahren kann beispielsweise benutzt werden, um einen Benutzer eines Client-Computers gegenüber einem entfernen Datei- oder Terminalserver zu authentisieren.

Bei einer Mehrfaktor-Einheit handelt es sich um eine Einheit, die mindestens einen der Schritte des vorgeschlagenen Verfahrens ausführt.

Gemäß Schritt a) des vorgeschlagenen Verfahrens liest die Client-Einheit Anmeldedaten eines Benutzers ein, wobei die Anmeldedaten eine Benutzerkennung und mehrere Faktoren umfassen.

Bei einem Faktor handelt es sich insbesondere jeweils um Daten, die zum Nachweisen der Identität eines Benutzers geeignet sind. Bei einem Faktor kann es sich zum Beispiel um eine alphanumerische Zeichenfolge oder um beliebige Binärdaten handeln. Beispiele für einen Faktor sind eine PIN (Personal Identification Number - Persönliche Kennnummer), ein OTP (One Time Password - Einmalpasswort) und eine digitale Repräsentation eines Fingerabdrucks oder einer Retina-Abtastung.

Unter Einlesen der Anmeldedaten ist das Einlesen der Anmeldedaten zu verstehen, die mit einer jeweils geeigneten Erfassungseinheit erfasst wurden. Beispielsweise können eine Benutzerkennung, eine PIN und/oder ein OTP durch Eingeben mit einer Tastatur erfasst werden, während ein Fingerabdruck mit einer Fingerabdruck-Scanvorrichtung und eine Retina-Abtastung mit einer Retina-Scanvorrichtung erfasst werden kann.

Gemäß Schritt b) werden die eingelesenen Anmeldedaten an eine Mehrfaktor-Einheit übertragen und gemäß Schritt c) von der Mehrfaktor-Einheit verifiziert.

Das Übertragen kann das Übertragen der unmodifizierten Anmeldedaten umfassen. Vorzugsweise erfolgt das Übertragen in verschlüsselter Form. Abschnitte der Anmeldedaten, im Speziellen einzelne oder alle der mehreren Faktoren, können auch in Form kryptographischer Derivate übertragen werden, wobei es sich um abgeleitete Werte handelt, die aus den entsprechenden Abschnitten der Anmeldedaten abgeleitet sind.

Das Verifizieren der eingelesenen und übertragenen Anmeldedaten umfasst das Verifizieren der Benutzerkennung und das Verifizieren der mehreren Faktoren. Das Verifizieren der Benutzerkennung aus den übertragenen Anmeldedaten kann das Abfragen eines zu der Benutzerkennung gehörigen Benutzerdatensatzes bei der zentralen Benutzerverwaltung umfassen. Das Verifizieren eines jeden der mehreren Faktoren aus den übertragenen Anmeldedaten kann jeweils ein Vergleichen eines Faktors mit in dem Benutzerdatensatz gespeicherten Referenzdaten umfassen.

Kann die Benutzerverwaltung keinen Benutzerdatensatz für die Benutzerkennung bereitstellen oder ergibt das Vergleichen für mindestens einen der Faktoren keine hinreichende Übereinstimmung, so endet das Verfahren, ohne dass der Benutzer authentisiert wird. Andernfalls gelten die Anmeldedaten als erfolgreich verifiziert, und das Verfahren wird mit Schritt d) fortgesetzt.

Es sei angemerkt, dass der beim Verifizieren gemäß Schritt c) vorzugsweise verwendete Referenzfaktor beispielsweise derart in dem Benutzerdatensatz gespeichert sein kann, dass er nur der Mehrfaktor-Einheit zugänglich ist und anderen Einheiten, die Zugriff auf das zentrale Benutzerverzeichnis haben, nicht zugänglich ist. Hierdurch unterscheidet sich ein Faktor gemäß dem vorgeschlagenen Verfahren, wie beispielsweise eine PIN, von einem Kennwort, wie beispielsweise dem Windows-Anmeldekennwort.

Die Mehrfaktor-Einheit fordert gemäß Schritt d) ein Zertifikat bei der zentralen Benutzerverwaltung an. Das Anfordern eines Zertifikats in Schritt d) umfasst beispielsweise das Erstellen einer Zertifikatsignierungsanforderung in Reaktion auf das Verifizieren der Anmeldedaten in Schritt c) und das Übertragen der Zertifikatsignierungsanforderung an die Benutzerverwaltung. Hierbei erstellt die Mehrfaktor-Einheit mittels einer kryptographischen Operation basierend auf einem zufälligen Wert, wie einer Pseudozufallszahl oder einer physikalischen Zufallszahl oder einer Folge aus Pseudo- oder physikalischen Zufallszahlen, ein Public-Private-Schlüsselpaar, das einen öffentlichen und einen privaten Schüssel umfasst. Ferner erstellt die Mehrfaktor-Einheit hierbei eine Zertifikatsignierungsanforderung (CSR - Certificate Signing Request), wobei es sich um einen Datensatz handelt, welcher den öffentlichen Schlüssel und Metadaten umfasst, und übermittelt die Zertifikatsignierungsanforderung an eine Zertifizierungsstelle der zentralen Benutzerverwaltung.

In Schritt e) empfängt die Mehrfaktor-Einheit von der Zertifizierungsstelle der zentralen Benutzerverwaltung das angeforderte Zertifikat. Schritt e) umfasst beispielsweise das Erstellen eines Zertifikats durch Signieren der in Schritt d) übertragenen Zertifikatsignierungsanforderung durch die Zertifizierungsstelle der zentralen Benutzerverwaltung in Reaktion auf das Übertragen der Zertifikatsignierungsanforderung in Schritt d), das Übertragen des angeforderten und erstellten Zertifikats an die Mehrfaktor-Einheit durch die Zertifizierungsstelle der zentralen Benutzerverwaltung und das Empfangen des übertragenen Zertifikats durch die Mehrfaktor-Einheit. Das empfangene Zertifikat umfasst hierbei den in Schritt d) übermittelten öffentlichen Schlüssel und die in Schritt d) übermittelten Metadaten und ist mit einer kryptographischen Signatur versehen, die die Zertifizierungsstelle unter Verwendung des in der Zertifizierungsstelle gespeicherten privaten Schlüssels erstellt hat, der dem Stammzertifikat zugeordnet ist.

Gemäß Schritt f) wird mindestens der in Schritt d) erstellte private Schlüssel, der dem in Schritt e) von der zentralen Benutzerverwaltung empfangenen Zertifikat zugeordnet ist, in der Mehrfaktor-Einheit mindestens vorübergehend gespeichert. Der private Schlüssel kann verknüpft mit der in Schritt c) verifizierten Benutzerkennung und/oder verknüpft mit dem in Schritt e) empfangenen Zertifikat gespeichert werden. Die Mehrfaktor-Einheit kann dazu ein geeignetes flüchtiges oder nichtflüchtiges Speichermittel umfassen, in dem private Schlüssel verknüpft mit Benutzerkennungen und/oder Zertifikaten speicherbar sind, wie beispielsweise ein Array oder eine Hashwerttabelle, die in einem flüchtigen Speicher, wie einem RAM (Random Access Memory), und/oder in einem nicht flüchtigen Speicher, wie einer Festplatte oder SSD (Solid State Disc), abgelegt ist.

Gemäß Schritt g) wird das Zertifikat von der Mehrfaktor-Einheit an die Client-Einheit übertragen. Das Übertragen erfolgt vorzugsweise in verschlüsselter Form, z.B. per SSL-Verschlüsselung (Secure Socket Layer).

Gemäß Schritt h) wird der Benutzer gegenüber der Zielserver-Einheit unter Verwendung des in der Client-Einheit vorhandenen, d.h. in Schritt g) empfangenen Zertifikats und des in der Mehrfaktor-Einheit gespeicherten privaten Schlüssels gegenüber der Zielserver-Einheit authentisiert. Insbesondere kommunizieren dabei die Client-Einheit, die Zielserver-Einheit und die zentrale Benutzerverwaltung untereinander gemäß dem zertifikatbasierten Authentisierungsverfahren. Insbesondere vergewissert sich die Zielserver-Einheit gemäß dem zertifikatbasierten Authentisierungsverfahren durch Kommunizieren mit der Client-Einheit und mit der zentralen Benutzerverwaltung davon, dass die Client-Einheit den privaten Schlüssel für kryptographische Operationen nutzen kann, wobei die Client-Einheit den privaten Schlüssel durch Kommunizieren mit der Mehrfaktor-Einheit für kryptographische Operationen nutzen kann. Der private Schlüssel wird dabei insbesondere nicht über das Netzwerk übertragen.

Das vorgeschlagene Verfahren verbessert die Flexibilität bei der Authentisierung, indem es die Authentisierung eines Benutzers mittels einer Benutzerkennung und mehrerer Faktoren (sog. Mehrfaktor-Authentisierung, MFA) bei einer Zielserver-Einheit ermöglicht, die ein zertifikatbasiertes Authentisierungsverfahren unterstützt, selbst wenn die Zielserver-Einheit eine Mehrfaktor-Authentisierung nicht unterstützt. Die zur Authentisierung mittels der Mehrfaktor-Einheit verwendeten Faktoren können flexibel gemäß dem Bedarf eines Unternehmens oder einer Organisation gewählt sein.

Das vorgeschlagene Verfahren verbessert ferner die Sicherheit bei der Authentisierung. Gemäß dem vorgeschlagenen Verfahren erhält ein Angreifer, der Kenntnis von einem der Faktoren erlangt, dennoch keinen Zugriff auf die von der Zielserver-Einheit bereitgestellte Ressource, da für erfolgreiches Verifizieren von Anmeldedaten durch die Mehrfaktor-Einheit, und damit für eine erfolgreiche Authentisierung, mehrere Faktoren erforderlich sind.

Gemäß einer Ausführungsform umfasst der Schritt h):
- Übertragen des Zertifikats von der Client-Einheit an die Zielserver-Einheit,
- Empfangen einer Aufgabe, deren Lösung mindestens den privaten Schlüssel erfordert, durch die Client-Einheit von der Zielserver-Einheit,
- Übertragen der Aufgabe von der Client-Einheit an die Mehrfaktor-Einheit,
- Ermitteln einer Lösung der Aufgabe durch die Mehrfaktor-Einheit unter Verwendung des in der Mehrfaktor-Einheit gespeicherten privaten Schlüssels,
- Übertragen der ermittelten Lösung der Aufgabe von der Mehrfaktor-Einheit an die Client-Einheit,
- Übertragen der ermittelten Lösung der Aufgabe von der Client-Einheit an die Zielserver-Einheit und
- Überprüfen der ermittelten Lösung der Aufgabe durch die Zielserver-Einheit.

Unter einer Aufgabe sind hierbei Daten zu verstehen, an denen eine Operation unter Verwendung des in der Mehrfaktor-Einheit gespeicherten privaten Schlüssels, insbesondere eine kryptographische Operation, durchgeführt werden soll, und unter einer Lösung der Aufgabe ist das Ergebnis der an der Aufgabe durchgeführten Operation zu verstehen. Bei der Aufgabe kann es sich also insbesondere um eine kryptographische Aufgabe handeln. Die vorgeschlagenen Schritte erlauben es der Client-Einheit, den gemäß dem vorgeschlagenen Verfahren in der Mehrfaktor-Einheit gespeicherten privaten Schlüssel für Operationen, wie kryptographische Operationen, im Rahmen des zertifikatbasierten Authentisierungsverfahrens zu nutzen. Die Mehrfaktor-Einheit verfügt nur dann über den privaten Schüssel, wenn zuvor gemäß dem vorgeschlagenen Verfahren die Identität des Benutzers mittels mehrerer Faktoren nachgewiesen worden ist.

Das vorgeschlagene Verfahren ermöglicht somit insbesondere die Verbesserung der Sicherheit durch Implementierung einer Mehrfaktor-Authentisierung (MFA) in Netzwerken mit Zielserver-Einheiten und einer zentralen Benutzerverwaltung, welche ein zertifikatbasiertes Authentisierungsverfahren unterstützen, aber kein Mehrfaktor-Authentisierungsverfahren unterstützen.

Die genannten und weitere vorteilhafte Effekte können dabei mit kommerziell erhältlichen Zielserver-Einheiten und zentralen Benutzerverwaltungen erzielt werden, ohne dass Modifikationen an dem Betriebssystem bzw. dem Programmcode, der diese Zielserver-Einheiten bzw. Benutzerverwaltungen implementiert, erforderlich sind.

Gemäß einer weiteren Ausführungsform umfasst die Aufgabe eine Datenfolge, das Ermitteln der Lösung der Aufgabe umfasst ein Versehen der Datenfolge mit einer Signatur unter Verwendung des privaten Schlüssels des Zertifikats, die Lösung der Aufgabe umfasst die mit der Signatur versehene Datenfolge und das Überprüfen der Lösung der Aufgabe umfasst ein Prüfen der Signatur der mit der Signatur versehenen Datenfolge; und/oder die Aufgabe umfasst eine verschlüsselte Form einer Datenfolge, das Ermitteln der Lösung der Aufgabe umfasst ein Entschlüsseln der verschlüsselten Form der Datenfolge mittels des privaten Schlüssels, die Lösung der Aufgabe umfasst die entschlüsselte verschlüsselte Form der Datenfolge und das Überprüfen der Lösung der Aufgabe umfasst ein Vergleichen der entschlüsselten verschlüsselten Form der Datenfolge mit der Datenfolge.

Bei der Datenfolge handelt es sich insbesondere um eine von der Zielserver-Einheit oder der zentralen Benutzerverwaltung gewählte, nicht vorhersehbare Datenfolge. Beispielsweise kann es sich bei der Datenfolge um einen Hashwert handeln. Insbesondere kann es sich um einen Hashwert einer mittels eines Pseudozufallszahlengenerators oder eines physikalischen Zufallszahlengerators erzeugten zufälligen Folge von Bytes handeln.

Das Signieren und/oder das Entschlüsseln unter Verwendung eines privaten Schlüssels sind Beispiele für Aufgaben bzw. kryptographische Operationen, anhand derer, d.h. anhand der übermittelten Lösungen, die Zielserver-Einheit im Rahmen des zertifikatbasierten Authentisierungsverfahrens überprüfen kann, dass die Client-Einheit den privaten Schlüssel für kryptographische Operationen nutzen kann. Dies ist dann der Fall, wenn die Signatur der von der Client-Einheit an die Zielserver-Einheit übertragenen, mit einer Signatur versehenen zufälligen Datenfolge mittels kryptographischer Operationen als echt, d.h. als erzeugt mittels eines privaten Schlüssels, der zu dem öffentlichen Schlüssel des von der Client-Einheit übermittelten Zertifikats zugeordnet ist, bestätigt werden kann, bzw. wenn die von der Client-Einheit an die Zielserver-Einheit übertragene entschlüsselte verschlüsselte Form einer Datenfolge der Datenfolge entspricht, deren verschlüsselte Form zuvor von der Zielserver-Einheit übertragen wurde. Auf diese Weise kann der Benutzer authentisiert werden, ohne dass geheime Daten, wie der private Schlüssel, über das Netzwerk übertragen müssen.

Gemäß einer weiteren Ausführungsform umfasst der Schritt g) das Übertragen ausschließlich eines öffentlichen Abschnitts des Zertifikats von der Mehrfaktor-Einheit an die Client-Einheit, und der private Schlüssel bleibt dabei in der Mehrfaktor-Einheit gespeichert.

Ein öffentlicher Abschnitt des Zertifikats umfasst insbesondere den öffentlichen Schlüssel und Metadaten und umfasst nicht den dem Zertifikat zugeordneten privaten Schüssel.

Die Sicherheit beim Authentisieren kann gemäß der vorliegenden Ausführungsform weiterhin dadurch erhöht werden, dass der private Schlüssel dem Benutzer und der Client-Einheit vorenthalten werden kann. Bei bekannten zertifikatbasierten Authentisierungsverfahren wird ein privater Schüssel beispielsweise bei der Client-Einheit, wie einem Arbeitsplatzrechner des Benutzers, zum Beispiel auf einer Festplatte, auf einem USB-Stick oder auf einer Smartcard gespeichert. Dort ist der private Schlüssel dem Risiko durch Verlust oder Diebstahl der Festplatte, des USB-Sticks bzw. der Smartcard ausgesetzt. Wird der private Schlüssel auf einer Festplatte oder einem USB-Stick gespeichert, ist er zusätzlich dem Risiko eines Ausspähens durch Schadsoftware ausgesetzt. Gemäß der vorliegenden Ausführungsform dagegen kann der private Schlüssel zu jedem Zeitpunkt des Verfahrens bei der Mehrfaktor-Einheit verbleiben. Die Mehrfaktor-Einheit kann beispielsweise als Abschnitt einer Server-Einheit implementiert sein, die in einem geschützten Raum aufgestellt ist, der Benutzern oder Dritten, die nicht Administratoren des Netzwerks sind, nicht zugänglich ist. Es kann sich dabei um dieselbe Server-Einheit handeln, die auch die zentrale Benutzerverwaltung implementiert, oder um eine separate Server-Einheit. Somit kann der private Schlüssel dem Verantwortungsbereich des Benutzers entzogen werden, und die Sicherheit kann erhöht werden.

Gemäß einer weiteren Ausführungsform ist die Zielserver-Einheit als Programmcode implementiert, der auf einem Server-Computer ausgeführt wird und einen Serverdienst bereitstellt.

Unter einem Serverdienst ist das serverseitige Bereitstellen einer Ressource an Benutzer einer Client-Einheit zu verstehen.

Gemäß der vorliegenden Ausführungsform wird mit den Schritten des vorgeschlagenen Verfahrens ein Benutzer bei einer Zielserver-Einheit eines beispielsweise entfernten Server-Computers authentisiert, um Zugang zu dem von der Zielserver-Einheit bereitgestellten Ressource zu erlangen. Eine derartige Zielserver-Einheit kann beispielsweise als Server implementiert sein, der ein Microsoft Windows Betriebssystem ausführt, Mitglied in einer Microsoft Active Directory Domäne und dadurch an Microsoft Active Directory (ein Beispiel für eine zentrale Benutzerverwaltung) gekoppelt ist, und eine oder mehrere Ressourcen in der Domäne bereitstellt, wie beispielsweise einen Dateifreigabedienst nach dem CIFS-Protokoll (Common Internet File System) oder einen Terminalserverdienst nach dem RDP-Protokoll (Remote Desktop Protokoll).

Im Speziellen wird herkömmlicherweise bei einer Zielserver-Einheit, die einen Terminalserverdienst nach dem RDP-Protokoll bereitstellt, eine interaktive Remote-Desktop-Sitzung aufgebaut und angezeigt, und die Authentisierung erfolgt über den Anmeldedialog der interaktiven Remote-Desktop-Sitzung. Dadurch wird zu einem Zeitpunkt, zu dem ein Benutzer noch nicht authentisiert ist, eine hohe Serverlast erzeugt, was Angriffspunkte für Denial-of-Service-Angriffe bietet. Daten, die während einer herkömmlichen RDP-Sitzung zwischen der Client-Einheit und der Zielserver-Einheit übertragen werden, werden mit dem als unsicher bekannten RC4-Algorithmus verschlüsselt und werden ausschließlich gemäß dem aufwändigen TCP-Protokoll übertragen. Um diese Probleme zu lösen, kann von der Zielserver-Einheit das Microsoft NLA-Protokoll (Network Level Authentication) benutzt werden. Gemäß NLA kann die Authentisierung gegenüber der Zielserver-Einheit bereits erfolgen, bevor die interaktive Remote-Desktop-Sitzung aufgebaut wird. Außerdem erhöht NLA die Sicherheit durch Verwendung von AES-Verschlüsselung und die Geschwindigkeit durch Verwendung des gegenüber TCP schnelleren UDP-Protokolls. Allerdings unterstützt das NLA-Protokoll ausschließlich entweder eine Authentisierung mit dem Windows-Anmeldekennwort oder eine zertifikatbasierte Authentisierung. Soll eine Authentisierung mittels mehrerer Faktoren (MFA) ohne Einsatz von Smartcards benutzt werden, um Zugang zu einer von einem Terminalserverdienst nach dem RDP-Protokoll bereitgestellten interaktiven Remote-Desktop-Sitzung zu erlangen, muss herkömmlich entweder auf die Verwendung von NLA verzichtet werden, oder es müssen mehrere Authentifizierungsverfahren kombiniert (einander vor- oder nachgeschaltet) werden. Dies wäre aber mit erhöhtem Aufwand für den Benutzer verbunden, da zweimal Anmeldedaten eingegeben werden müssten. Im Gegensatz dazu ermöglicht das vorgeschlagene Verfahren die Authentisierung mittels mehrerer Faktoren gegenüber einer Zielserver-Einheit, die einen Terminalserverdienst nach dem RDP-Protokoll bereitstellt und kein Mehrfaktor-Authentifizierungsverfahren, jedoch ein zertifikatbasiertes Authentisierungsverfahren gemäß NLA-Protokoll unterstützt. Indem eine Mehrfaktor-Authentisierung gemäß der vorliegenden Ausführungsform mit der zertifikatbasierten Authentisierung des NLA-Protokolls kombiniert wird, kann der Benutzer mittels mehrerer Faktoren authentisiert werden, bevor eine interaktive Remote-Desktop-Sitzung aufgebaut wird, wodurch die Serverlast und die Netzwerklast reduziert und die Sicherheit insbesondere im Hinblick auf mögliche Denial-of-Service-Angriffe gesteigert werden kann. Weiterhin wird das Benutzererlebnis verbessert, da nur einmal Anmeldedaten eingegeben werden müssen. Zudem kann das NLA-Protokoll verwendet werden, wobei Daten mit einem sichereren Verschlüsselungsalgorithmus wie beispielsweise AES verschlüsselt werden und mindestens abschnittsweise gemäß dem schlankeren UDP-Protokoll übertragen werden können, was die Sicherheit und die Geschwindigkeit erhöht.

Gemäß einer weiteren Ausführungsform ist die Zielserver-Einheit als Programmcode implementiert, der auf einem Client-Computer ausgeführt wird und einen lokalen Anmeldedienst bereitstellt.

Gemäß der vorliegenden Ausführungsform wird mit den Schritten des vorgeschlagenen Verfahrens ein Benutzer bei einer Zielserver-Einheit eines lokalen Client-Computers authentisiert, um Zugang zu einer interaktiven Sitzung auf dem Client-Computer zu erhalten. Der Client-Computer kann insbesondere ein Arbeitsplatzrechner, eine Workstation, ein Notebook oder eine mobile Einrichtung sein, der/die ein Betriebssystem, wie Microsoft Windows oder Apple Mac OS X, ausführt und an eine zentrale Benutzerverwaltung, wie Microsoft Active Directory oder Apple Open Directory, gekoppelt ist. Unter einer Zielserver-Einheit ist in diesem Falle das lokale Sicherheits-Subsystem des Betriebssystems des Client-Computers zu verstehen, das authentisierten Nutzern Zugriff auf den Arbeitsplatzrechner gewährt. Der Benutzer wird somit gemäß der vorliegenden Ausführungsform mittels mehrerer Faktoren gegenüber der Zielserver-Einheit des Client-Computers authentisiert, um Zugriff auf die von dem Client-Computer bereitgestellten Ressourcen, wie RAM, Festplatte, Bildschirm sowie weitere in derselben Domäne an den Arbeitsplatzrechner bereitgestellte Ressourcen, wie z. B. ein Netzwerkbenutzerverzeichnis, zu erhalten.

Somit kann gemäß den jeweiligen Ausführungsformen eine Mehrfaktor-Authentisierung beispielsweise für die Authentisierung gegenüber einem lokalen Client-Computer und auch für die Authentisierung gegenüber einem entfernten Servercomputer verwendet werden. Für beide Vorgänge kann eine selbe Mehrfaktor-Einheit verwendet werden. Die universelle Anwendbarkeit der vorgeschlagenen Lösung wird verbessert und der Arbeits- und Kostenaufwand für die Netzwerkadministration wird verringert.

Gemäß einer weiteren Ausführungsform ist die Client-Einheit als Programmcode implementiert, der von einem Client-Computer ausgeführt wird und gegenüber einem Betriebssystem des Client-Computers das Verhalten einer Smartcard nachbildet.

Der Programmcode, der gemäß der vorliegenden Ausführungsform die Client-Einheit implementiert, kann insbesondere einen oder mehrere Gerätetreiber, die das Verhalten eines Smartcard-Lesegeräts sowie einer darin eingelegten Smartcard simulieren, und ein Plug-In umfassen, das ein Anmeldefenster zur Eingabe der mehreren Faktoren des vorgegebenen Verfahrens anzeigt.

Kommerziell verfügbare Betriebssysteme für Client-Computer, wie zum Beispiel Microsoft Windows, sind in der Regel nicht quelloffen und können daher von Anwendern oder Drittanbietern nicht beliebig modifiziert werden. Solche nicht quelloffenen Betriebssysteme bieten jedoch definierte Schnittstellen zur Einbindung von Gerätetreiber-Programmcode von Drittanbietern, welcher dazu vorgesehen ist, die Kommunikation mit Peripheriegeräten zu implementieren, sowie Schnittstellen zur Einbindung von Plug-Ins zur Modifikation des Erscheinungsbilds des Anmeldefensters.

Ferner unterstützen kommerziell verfügbare Client-Betriebssysteme, wie Microsoft Windows, ein zertifikatbasiertes Authentisierungsverfahren, wobei vorgesehen ist, das Zertifikat und der dem Zertifikat zugeordnete private Schlüssel eines Benutzers auf einer Smartcard abzulegen. Eine Smartcard umfasst einen Chip und ein Trägerelement aus Kunststoff, wobei der Chip eine Steuereinrichtung und ein Speichermittel umfasst, wobei in dem Speichermittel ein Zertifikat und der dem Zertifikat zugeordnete Schüssel abgelegt ist und die Steuereinrichtung zum Durchführen von kryptographischen Operationen mittels des privaten Schlüssels eingerichtet ist. Das Betriebssystem des Client-Computers kommuniziert über die definierte Schnittstelle mit einem Gerätetreiber, welcher mit der Steuereinrichtung der Smartcard kommuniziert.

Indem die von der Client-Einheit ausgeführten Schritte gemäß der vorliegenden Ausführungsform als Programmcode implementiert sind, der beispielsweise einen Gerätetreiber umfasst, und der das Verhalten einer Smartcard nachbildet, kann ein Client-Computer, der ein nicht quelloffenes Betriebssystem, wie Microsoft Windows, ausführt, dazu veranlasst werden, alle gemäß dem vorgeschlagenen Verfahren von der Client-Einheit durchzuführenden Schritte durchzuführen, ohne dass eine Smartcard oder ein Smartcard-Lesegerät tatsächlich physikalisch vorhanden sind, und ohne dass Modifikationen an dem möglicherweise nicht quelloffenen Betriebssystem des Client-Computers und insbesondere an dessen Funktionen zur zertifikatbasierten Authentisierung erforderlich sind.

Durch ein solches Nachbilden des Verhaltens einer Smartcard durch einen Programmcode, der eine Client-Einheit gemäß der vorliegenden Ausführungsform implementiert, wird die Sicherheit erhöht, weil der private Schlüssel in der Mehrfaktor-Einheit gespeichert wird, die in einem geschützten Raum angeordnet sein kann, wohingegen eine Smartcard von einem Benutzer mitgeführt wird und daher leicht verloren gehen kann. Ferner werden der Aufwand und die Kosten für die Netzwerkadministration reduziert, da keine Smartcard-Lesegeräte und keine Smartcards angeschafft werden und keine Smartcards an Benutzer ausgegeben werden müssen.

Gemäß einer Ausführungsform ist die Client-Einheit als Programmcode implementiert, der von einem Server-Computer ausgeführt wird und mindestens während des Authentisierens Datenübertragungen zwischen einem entfernten Client-Computer und dem Server-Computer filtert.

Bestimmte Netzwerkressourcen, wie zum Beispiel webbasierte Applikationen, können von einer Zielserver-Einheit eines Server-Computers bereitgestellt werden, der einen Website oder einen webbasierten Dienst gemäß dem HTTP-Protokoll bereitstellt. Zum Zugriff auf derartige webbasierte Applikationen eignet sich ein beliebiger Client-Computer, auf dem ein Webbrowser ausgeführt wird. Gemäß der vorliegenden Ausführungsform kann die Client-Einheit als Programmcode implementiert sein, der auf dem Server-Computer ausgeführt wird, beispielsweise als Proxy-Dienst. Ein Beispiel für eine Zielserver-Einheit, die einen webbasierten Dienst bereitstellt und ein zertifikatbasiertes Authentisierungsverfahren unterstützt, ist ein Server-Computer, der eine Version der Microsoft Internet Information Services (IIS) ausführt. Durch Implementieren der Client-Einheit als Programmcode, der als Filter oder Proxy-Dienst auf einem solchen Server-Computer oder einem weiteren Server-Compuer, der zwischen den Server-Computer und den Client-Computer gekoppelt ist, ausgeführt wird, kann das vorgeschlagene Verfahren gemäß der vorliegenden Ausführungsform durchgeführt werden, ohne dass Modifikationen an der beispielsweise nicht quelloffenen Implementierung des webbasierten Diensts oder Modifikationen an den Client-Computern erforderlich sind, was die Anwendbarkeit des Verfahrens auf die Erlangung von Zugriff auf webbasierte Dienste ausgedehnt, den Verwaltungsaufwand reduziert, und eine sichere Authentifizierung gegenüber Zielserver-Einheiten, die webbasierte Dienste bereitstellen, auch Benutzern von Client-Computern ermöglicht, an denen kein Smartcard-Lesegerät angeschlossen werden kann und/oder keine Treibersoftware zur Implementierung einer zum Durchführen von Schritten des vorgeschlagenen Verfahrens eingerichteten Client-Einheit installiert werden kann, wie beispielsweise Benutzern von Thin Clients, mobilen Computern oder öffentlichen Terminals.

Gemäß einer weiteren Ausführungsform ist jeder der mehreren Faktoren aus einer der Klassen Wissen, Besitz und Sein ausgewählt.

Bei einem Faktor der Klasse Wissen handelt es sich um Daten bzw. ein kryptographisches Derivat von Daten, die nur dem Benutzer bekannt sind, wie zum Beispiel eine PIN, wobei es sich bei einer PIN um eine alphanumerische Zeichenfolge handeln kann, wie zum Beispiel "12AB5".

Bei einem Faktor der Klasse Besitz handelt es sich um Daten oder ein kryptographisches Derivat von Daten, die belegen, dass sich der Benutzer im Besitz einer vorbestimmten Vorrichtung, wie beispielsweise einem Token, einem Mobilgerät oder einer gedruckten Liste, befindet. Beispiele für einen Faktor der Klasse Besitz sind ein Einmalpasswort oder OTP (One Time Password), wobei es sich bei einem OTP zum Beispiel um eine alphanumerische Zeichenfolge handelt, die von einer im Besitz des Benutzers befindlichen Vorrichtung generiert oder empfangen und angezeigt wird, beispielsweise von einem Smartphone mit der Google Authenticator App; Daten, die von einem FIDO U2F Key (Universal Second Factor) gemäß dem FIDO U2F Protokoll bereitgestellt werden; oder eine TAN (Transaktionsnummer) aus einer TAN-Liste.

Bei einem Faktor der Klasse Sein, auch als Inherence bezeichnet, handelt es sich um Daten oder ein kryptographisches Derivat von Daten, die ein körperlich mit dem Benutzer untrennbar verbundenes Charakteristikum identifizieren, wie zum Beispiel ein biometrisches Merkmal, insbesondere eine digitale Repräsentation eines Fingerabdrucks, einer Retina-Abtastung oder ein Bild des Benutzers.

Wie vorstehend beschrieben, wird durch die Verwendung mehrerer Faktoren zur Authentisierung die Sicherheit erhöht, da ein einzelner kompromittierter Faktor nicht ausreicht, um Zugriff auf die von der Zielserver-Einheit bereitgestellten Ressourcen zu erlangen. Vorzugsweise sind mindestens zwei der mehreren Faktoren aus unterschiedlichen Klassen ausgewählt. Dadurch kann die Sicherheit weiter erhöht werden, da Faktoren unterschiedlicher Klassen auf unterschiedliche Weise kompromittierbar sind, etwa ist ein Faktor der Klasse Besitz anfällig gegen Verlust, ein Faktor der Klasse Sein dagegen anfällig gegen die Anwendung körperlicher Gewalt.

Gemäß einer weiteren Ausführungsform stellt die zentrale Benutzerverwaltung einen Verzeichnisdienst und eine Zertifizierungsstelle bereit.

Ein Verzeichnisdienst ist ein Dienst, der entsprechend autorisierten Einheiten Zugriff auf ein Benutzerverzeichnis bereitstellt, in welchem Benutzerdatensätze gespeichert sind. Ein Benutzerdatensatz umfasst mindestens eine Benutzerkennung und Daten, die die Berechtigungen des zugehörigen Benutzers beschreiben. Ein Benutzerdatensatz kann ferner Daten umfassen, die zum Prüfen der Identität eines Benutzers geeignet sind, wie zum Beispiel einen Kennwort-Hashwert. Bei dem Verzeichnisdienst kann es sich um eine Datenbank handeln, welche das LDAP-Protokolls (Lightweight Directory Access Protocol) implementiert. Ein Beispiel für den Verzeichnisdienst sind die Microsoft Active Directory Directory Services (AD DS).

Eine Zertifizierungsstelle ist, wie vorstehend erwähnt, eine Einrichtung, die zum Erzeugen von Zertifikaten beispielsweise durch Signieren von Zertifikatsignierungsanforderungen mittels eines zu einem Stammzertifikat gehörigen privaten Schüssel eingerichtet ist. Ein Beispiel für eine Zertifizierungsstelle sind die Microsoft Active Directory Certificate Services. (AD CS).

Der Verzeichnisdienst, der einen Abschnitt einer zentralen Benutzerverwaltung ausbildet, die ein zertifikatbasiertes Authentifizierungsverfahren unterstützt, kann zum Überprüfen von Zertifikaten eingerichtet sein, die von der Zertifizierungsstelle signiert sind. Es kann auch eine jeweilige Zielserver-Einheit, die mit der zentralen Benutzerverwaltung gekoppelt ist und ein zertifikatbasiertes Authentifizierungsverfahren unterstützt, zum Überprüfen solcher Zertifikate eingerichtet sein.

Gemäß einer weiteren Ausführungsform umfasst der Schritt c):
- Vergleichen eines Faktors der mehreren in den von der Client-Einheit an die Mehrfaktor-Einheit übertragenen Anmeldedaten umfassten Faktoren oder aus dem Faktor abgeleiteter Daten mit einem in dem Verzeichnisdienst der zentralen Benutzerverwaltung bereitgestellten Referenz-Faktor oder mit aus dem Referenz-Faktor abgeleiteten Daten durch die Mehrfaktor-Einheit.

Das Vergleichen kann das Vergleichen eines Faktors oder aus dem Faktor nach einem vorbestimmten Verfahren abgeleiteter Daten mit einem in dem Benutzerdatensatz gespeicherten Referenzfaktor oder mit aus dem Referenzfaktor nach einem vorbestimmten Verfahren abgeleiteten Daten umfassen. Das Vergleichen kann ein Prüfen auf Übereinstimmung, z.B. das Prüfen auf Übereinstimmung zweier Zeichenfolgen oder zweier abgeleiteter Daten, oder ein Prüfen auf hinreichende Ähnlichkeit umfassen. Handelt es sich bei einem der Faktoren beispielsweise um ein Bild des Benutzers, so kann das Vergleichen das Vergleichen charakteristischer Gesichtszüge auf hinreichende Ähnlichkeit mit einem in dem Benutzerdatensatz hinterlegten Referenz-Bild umfassen.

Beispielsweise wird eine zu verifizierende PIN mit einer in dem Benutzerdatensatz gespeicherten Referenz-PIN (ein Beispiel für einen Referenzfaktor) verglichen, oder ein übertragenes kryptographisches Derivat einer zu verifizierenden PIN wird mit einem kryptographischen Referenz-Derivat der Referenz-PIN verglichen, welches als kryptographisches Referenz-Derivat in dem Benutzerdatensatz gespeichert sein kann oder durch die Mehrfaktor-Einheit aus einer in dem Benutzerdatensatz gespeicherten PIN abgeleitet werden.

Gemäß einer weiteren Ausführungsform ist einer der mehreren in den von der Client-Einheit an die Mehrfaktor-Einheit übertragenen Anmeldedaten umfassten Faktoren ein Einmalpasswort, das von einer im Besitz des Benutzers befindlichen Einrichtung angezeigt wird, und der Schritt c) umfasst:
- Berechnen eines Vergleichswerts durch Ausführen einer Rechenoperation anhand eines im Verzeichnisdienst bereitgestellten Seedwerts und eines von der Mehrfaktor-Einheit durch eine Messung ermittelten Parameters durch die Mehrfaktor-Einheit und
- Vergleichen des in den von der Client-Einheit an die Mehrfaktor-Einheit übertragenen Anmeldedaten umfassten Einmalpassworts mit dem von der Mehrfaktor-Einheit berechneten Vergleichswert.

Bei einer Messung kann es sich insbesondere um eine Zeitmessung oder um eine Ereignismessung handeln. Bei einer Zeitmessung wird ein numerischer Wert ermittelt, der für das aktuelle Datum und die aktuelle Uhrzeit indikativ ist. Bei einer Ereignismessung wird ein numerischer Wert gemessen, der für die Anzahl von Betätigungen eines Knopfs der im Besitz des Benutzers befindlichen Einrichtung indikativ ist.

Beispielsweise wird ein zu verifizierendes OTP (One Time Password - Einmalpasswort), das dem Benutzer von einem in seinem Besitz befindlichen Smartphone oder Token (Beispiele für die im Besitz des Benutzers befindliche Einrichtung) angezeigt und vom Benutzer eingegeben und übertragen wurde, mit einem abgeleiteten Referenz-OTP verglichen, das abgeleitet wird durch Anwenden einer nicht invertierbaren kryptographischen Hash-Funktion (ein Beispiel für eine Rechenoperation) auf einen in dem zu dem Benutzer gehörigen Benutzerdatensatz im Benutzerverzeichnis des Verzeichnisdiensts gespeicherten Seedwert (ein Beispiel für einen Referenzfaktor), der mit einem in der im Besitz des Benutzers befindlichen Einrichtung gespeicherten Seedwert identisch ist.

Gemäß einer weiteren Ausführungsform wird das Zertifikat als Reaktion auf das Anfordern eines Zertifikats durch die Mehrfaktor-Einheit bei der zentralen Benutzerverwaltung von dem zertifikatbasierten Authentisierungsdienst der zentralen Benutzerverwaltung erstellt, und das Zertifikat weist eine Gültigkeitsdauer von höchstens 24 Stunden auf und/oder verliert als Reaktion auf das Authentisieren des Benutzers seine Gültigkeit.

Die Gültigkeitsdauer eines Zertifikats gibt an, von welchem Zeitpunkt bis zu welchem Zeitpunkt bzw. innerhalb welchen Zeitraums ein Zertifikat gültig ist. Außerhalb seiner Gültigkeitsdauer kann ein Zertifikat nicht zum Authentisieren eines Benutzers verwendet werden.

Wie vorstehend erläutert, werden Zertifikate und diesen zugeordnete private Schlüssel für ein zertifikatbasiertes Authentisierungsverfahren herkömmlicherweise beispielsweise auf Smartcards abgelegt, und daher ist es erforderlich, wenn die Gültigkeitsdauer eines auf einer Smartcard gespeicherten Zertifikats abläuft, unter hohem Aufwand die Smartcard neu zu initialisieren bzw. eine neue Smartcard an den Benutzer auszuhändigen. Herkömmlicherweise werden Zertifikate, die bei einem zertifikatbasierten Authentisierungsverfahren benutzt werden, daher mit langen Gültigkeitsdauern erstellt. Dies stellt ein Sicherheitsrisiko dar. Geht eine Smartcard unbemerkt verloren, kann sie von einem gegebenenfalls böswilligen Finder der verlorenen Smartcard bis zum Ablauf der Gültigkeitsdauer missbraucht werden. Wenn der Verlust bemerkt wird, kann das Zertifikat der verlorenen Smartcard widerrufen werden, was jedoch einen hohen Aufwand verursacht.

Im Gegensatz dazu wird gemäß der vorliegenden Ausführungsform bei jedem Authentisierungsvorgang ein neues Zertifikat erstellt. Dieses wird höchstens für die Dauer der an den Authentisierungsvorgang gemäß dem vorgeschlagenen Verfahren anschließenden Sitzung benötigt. Die Gültigkeitsdauer des Zertifikats beträgt daher beispielsweise höchstens 24 Stunden, bevorzugt höchstens 8 Stunden und besonders vorzugsweise höchstens 1 Stunde.

In einigen Varianten erhält die Client-Einheit von der Zielserver-Einheit im Falle einer erfolgreichen Authentisierung in Schritt h) als Resultat des zertifikatbasierten Authentisierungsverfahrens ein kryptographisches Login-Token, wobei es sich um einen kryptographischen Datensatz handelt, mittels dessen sich die Client-Einheit im Laufe der weiteren Sitzung mit der Zielserver-Einheit ausweisen kann, ohne erneut Anmeldedaten des Benutzers einzulesen. In diesen Varianten wird das Zertifikat nur für die Dauer des Anmeldevorgangs benötigt. Die Gültigkeitsdauer beträgt daher in diesen Varianten bevorzugt höchstens 10 Minuten, und besonders bevorzugt handelt es sich in diesen Varianten bei dem Zertifikat um ein Einmalzertifikat, das als Reaktion auf das Authentisieren des Benutzers seine Gültigkeit verliert.

Demgemäß kann durch das automatische Erstellen von kurzlebigen Zertifikaten oder Einmalzertifikaten als Reaktion auf das Anfordern eines Zertifikats durch die Mehrfaktor-Einheit bei der zentralen Benutzerverwaltung der Aufwand für die Netzwerkadministration verringert werden, da keine manuelle Verwaltung von Benutzerzertifikaten durch Netzwerkadministratoren und/oder Benutzer mehr erforderlich ist. Zudem kann durch Zertifikate mit kurzer Gültigkeitsdauer und/oder Einmalzertifikate die Sicherheit weiter verbessert werden.

Gemäß einer weiteren Ausführungsform umfasst das vorgeschlagene Verfahren ferner:
- Deaktivieren einer Funktionalität zur kennwortbasierten Authentisierung der Zielserver-Einheit und/oder der zentralen Benutzerverwaltung.

Das heißt, das Verfahren kann bevorzugt mit einer Zielserver-Einheit und einer zentralen Benutzerverwaltung durchgeführt werden, deren Funktionalität zur kennwortbasierten Authentisierung deaktiviert ist.

Unter kennwortbasierter Authentisierung ist ein Verfahren zum Authentisieren mittels einer Benutzerkennung und eines Kennworts zu verstehen. Unter einem Kennwort ist eine alphanumerische Zeichenfolge zu verstehen, die nur dem Benutzer bekannt und daher zum Nachweis seiner Identität geeignet ist. Ein mit dem Kennwort identisches Referenzkennwort oder ein kryptographisches Derivat des Referenzkennworts kann in dem Benutzerdatensatz des Benutzers im Benutzerverzeichnis der zentralen Benutzerverwaltung hinterlegt sein.

Das Deaktivieren der Funktionalität zur kennwortbasierten Authentisierung einer zentralen Benutzerverwaltung kann zum Beispiel beim Konfigurieren der zentralen Benutzerverwaltung global für alle Benutzer erfolgen. Alternativ dazu kann das Deaktivieren der Funktionalität zur kennwortbasierten Authentisierung beispielsweise beim Provisionieren eines jeweiligen Benutzerdatensatzes für den jeweiligen Benutzerdatensatz oder nach dem Provisionieren für mehrere oder alle Benutzerdatensätze dadurch erfolgen, dass die Einträge für das kryptographische Derivat des Referenzkennworts in einem jeweiligen Benutzerdatensatz mit einem ungültigen kryptographischen Derivat überschrieben wird, oder dadurch, dass der Eintrag für das Referenzkennwort oder das kryptographische Derivat des Referenzkennworts in einem jeweiligen Benutzerdatensatz gelöscht wird. Ein Beispiel für ein Kennwort ist das Windows-Anmeldekennwort. Wie vorstehend erwähnt, handelt es sich bei einem Kennwort, wie dem Windows-Anmeldekennwort, nicht um einen Faktor gemäß dem vorgeschlagenen Verfahren.

Verfahren mit kennwortbasierter Authentisierung sind aufgrund mangelnder Sicherheit nachteilig, da das Kennwort vom Benutzer versehentlich preisgegeben, durch einen Wörterbuchangriff ermittelt oder während der Übertragung im Netzwerk mitgehört werden kann. Kommerziell verfügbare Client- und Server-Betriebssysteme verfügen über eine Vielzahl von bereitstellbaren Diensten, die alle mindestens ein kennwortbasiertes Authentisierungsverfahren unterstützen. Ein Referenz-Kennwort oder ein kryptographisches Referenz-Derivat des Kennworts ist in der Regel in einem Abschnitt des Benutzerdatensatzes hinterlegt, der durch zahlreiche Dienste und Einheiten auslesbar ist. In der Regel unterstützen nicht alle diese Dienste und Einheiten kryptographisch abgesicherte Authentisierungsverfahren, was das Risiko eines Mithörens des Kennworts bei der Übertragung über das Netzwerk weiter erhöht. Wird ein Kennwort bei einer unsicheren Verwendung mit einem unsicheren kennwortbasierten Authentisierungsverfahren kompromittiert, sind alle Dienste kompromittiert, die ein kennwortbasiertes Authentisierungsverfahren mit demselben Kennwort unterstützen. Diesem Problem wird herkömmlich begegnet, indem versucht wird, nicht benötigte Dienste mit unsicherem kennwortbasierten Authentisierungsverfahren zu deaktivieren. Dabei kann es jedoch geschehen, dass aufgrund der großen Vielzahl solcher Dienste einzelne Dienste übersehen werden. Auch können bei einem kommerziell verfügbaren, nicht quelloffenen Server- oder Client-Betriebssystem unter Umständen nicht alle solche Dienste deaktivierbar sein.

Da das vorgeschlagene Verfahren in seinen Ausführungsformen universell für alle Authentisierungsvorgänge anwendbar ist, die mindestens ein zertifikatbasiertes Authentisierungsverfahren unterstützen, beispielsweise für die Authentisierung gegenüber einem lokalen Arbeitsplatz-Computer, für die Authentisierung gegenüber einem entfernten Terminal-Server oder für die Authentisierung gegenüber einem entfernten Webserver, kann durch Deaktivieren der Funktionalität zur kennwortbasierten Authentisierung die Sicherheit weiter verbessert werden, ohne dass es zu Funktionseinschränkungen kommt.

Gemäß einem zweiten Aspekt wird ein Computerprogrammprodukt vorgeschlagen, welches einen oder mehrere Computerprogrammproduktteile umfasst, die auf mindestens einer programmgesteuerten Einrichtung die Durchführung eines Verfahrens gemäß dem ersten Aspekt oder gemäß einer der Ausführungsformen des ersten Aspekts veranlassen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein System zur Authentisierung eines Benutzers gegenüber einer mit einer zentralen Benutzerverwaltung gekoppelten Zielserver-Einheit mit einer Client-Einheit, einer Mehrfaktor-Einheit und einer Authentisierungs-Einheit vorgeschlagen. Dabei unterstützen die Zielserver-Einheit und die zentrale Benutzerverwaltung mindestens ein zertifikatbasiertes Authentisierungsverfahren.

Die Client-Einheit weist dabei auf:
eine erste Einheit zum Einlesen von Anmeldedaten des Benutzers, wobei die Anmeldedaten eine Benutzerkennung und mehrere Faktoren umfassen,
eine zweite Einheit zum Übertragen der eingelesen Anmeldedaten von der Client-Einheit an die Mehrfaktor-Einheit, und
die Mehrfaktor-Einheit weist auf:
e ine dritte Einheit zum Verifizieren der übertragenen Anmeldedaten,
e ine vierte Einheit zum Anfordern eines Zertifikats bei der zentralen Benutzerverwaltung im Falle des erfolgreichen Verifizierens der Anmeldedaten,
e ine fünfte Einheit zum Empfangen des angeforderten Zertifikats von der zentralen Benutzerverwaltung,
e ine sechste Einheit zum Speichern eines dem Zertifikat zugeordneten privaten Schlüssels in der Mehrfaktor-Einheit, und
e ine siebte Einheit zum Übertragen des Zertifikats von der Mehrfaktor-Einheit an die Client-Einheit.

Die Authentisierungs-Einheit ist dabei zum Authentisieren des Benutzers gegenüber der Zielserver-Einheit unter Verwendung des in der Client-Einheit vorhandenen Zertifikats und des in der Mehrfaktor-Einheit gespeicherten privaten Schlüssels eingerichtet.

Beispielsweise ist die Mehrfaktor-Einheit kommunikativ mit mindestens der Client-Einheit und der zentralen Benutzerverwaltung gekoppelt, die Client-Einheit ist kommunikativ mit mindestens der Zielserver-Einheit und der Mehrfaktor-Einheit gekoppelt, und die Zielserver-Einheit ist kommunikativ mit der Client-Einheit gekoppelt und ferner mit der zentralen Benutzerverwaltung gekoppelt.

Die erste Einheit der Client-Einheit kann beispielsweise als Treiber ausgebildet sein, der Anmeldedaten von einem Fingerabdruckscanner einliest, oder als Plug-In, welches mit einer Tastatur eingegebene Anmeldedaten einliest, die von einem Anmelde-Benutzerschnittstellen-Modul bereitgestellt werden.

Die zweite Einheit der Client-Einheit bildet insbesondere ein Mehrfaktor-Client-Mittel, welches die von der ersten Einheit eingelesenen Anmeldedaten an eine Mehrfaktor-Einheit überträgt, um einen Benutzer zu authentisieren.

Die Client-Einheit kann weitere Einheiten und Mittel umfassen. Insbesondere kann die Client-Einheit ferner ein erstes Authentisierungsmittel umfassen, das mindestens einen Abschnitt der Authentisierungs-Einheit des Systems gemäß dem dritten Aspekt ausbildet. Gemäß Ausführungsformen des dritten Aspekts kann das erste Authentisierungsmittel dazu eingerichtet sein, von der Zielserver-Einheit übertragene Aufgaben an die Mehrfaktor-Einheit zu übertragen und von der Mehrfaktor-Einheit übertragene Lösungen an die Zielserver-Einheit zu übertragen.

Die dritte Einheit der Mehrfaktor-Einheit bildet insbesondere ein Mehrfaktor-Servermittel zum Verifizieren der empfangenen Anmeldedaten, die eine Benutzerkennung und mehrere Faktoren umfassen, und die vierte bis siebte Einheit bilden insbesondere ein Zertifikatservermittel zum Anfordern, Empfangen, Speichern und Bereitstellen mindestens von Abschnitten von Zertifikaten und/oder privaten Schüsseln.

Die Mehrfaktor-Einheit kann ferner ein drittes Authentisierungsmittel umfassen, das mindestens einen Abschnitt der Authentisierungs-Einheit des Systems gemäß dem dritten Aspekt ausbildet. Gemäß einer Ausführungsform des dritten Aspekts handelt es sich bei dem dritten Authentisierungsmittel um ein Mittel zum Ermitteln einer Lösung einer Aufgabe unter Verwendung eines im Zertifikatservermittel der Zielserver-Einheit gespeicherten privaten Schlüssels. Gemäß einer weiteren Ausführungsform des dritten Aspekts handelt es sich bei dem dritten Authentisierungsmittel insbesondere um ein Kryptographiemittel zum Durchführen einer kryptographischen Operation, wie eines Verschlüsselns oder eines Signierens einer übertragenen Zeichenfolge unter Verwendung eines im Zertifikatservermittel gespeicherten privaten Schlüssels.

Die Mehrfaktor-Einheit kann daneben weitere Einheiten und Mittel umfassen, beispielsweise eine Provisionierungs-Einheit zur Mitwirkung bei der Provisionierung von Benutzerdatensätzen in der zentralen Benutzerverwaltung.

Die Authentisierungs-Einheit kann das erste Authentisierungsmittel der Client-Einheit, das dritte Authentisierungsmittel der Mehrfaktor-Einheit, sowie ein zweites Authentisierungsmittel umfassen, welches beispielsweise von der Zielserver-Einheit umfasst ist und gemäß Ausführungsformen des dritten Aspekts dazu eingerichtet ist, Aufgaben an die Client-Einheit zu übertragen und von der Client-Einheit übertragene Lösungen bzw. Ergebnisse kryptographischer Operationen zu überprüfen oder deren Überprüfung durch Einheiten der zentralen Benutzerverwaltung zu veranlassen, um einen Benutzer zu authentisieren.

Die jeweilige Einheit, zum Beispiel die erste Einheit, kann hardwaretechnisch und/oder auch softwaretechnisch implementiert sein. Bei einer hardwaretechnischen Implementierung kann die Einheit als Vorrichtung oder als Teil einer Vorrichtung, zum Beispiel als Computer, als Mobilgerät oder als Mikroprozessor oder als Teil davon ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Wie vorstehend beschrieben, kann die Client-Einheit insbesondere als Programmcodeabschnitt ausgebildet sein, der auf einem Client-Computer, auf einer mobilen Einrichtung und/oder auf einem Server-Computer ausgeführt wird, und die Zielserver-Einheit kann insbesondere als Programmcodeabschnitt ausgebildet sein, der auf einem Server-Computer oder auf einem Client-Computer ausgeführt wird. Die Zielserver-Einheit, die Mehrfaktor-Einheit und die zentrale Benutzerverwaltung können als Programmcode ausgebildet sein, der auf jeweils einem oder mehreren unterschiedlichen Server-Computern ausgeführt wird, oder mindestens Abschnitte der jeweiligen Einheiten können als Programmcode ausgebildet sein, der auf einem selben Server-Computer ausgeführt wird.

Die für das vorgeschlagene Verfahren beschriebenen Ausführungsformen und Merkmale gelten für das vorgeschlagene System entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm von Ausführungsbeispielen des vorgeschlagenen Authentisierungsverfahrens.
- Fig. 2: zeigt ein schematisches Ablaufdiagramm der von Schritt S80 in Fig. 1 umfassten Schritte S801 bis S807 von Ausführungsbeispielen des vorgeschlagenen Authentisierungsverfahrens.
- Fig. 3: zeigt eine schematische Darstellung einer Anordnung mehrerer Computer, die zur Durchführung eines vorgeschlagenen Authentisierungsverfahrens gemäß einem ersten Ausführungsbeispiel eingerichtet sind.
- Fig. 4: zeigt eine schematische Darstellung eines Systems aus mehreren Einheiten, die als Abschnitte mehrerer Computer implementiert sind und zur Durchführung des Authentisierungsverfahrens gemäß dem ersten Ausführungsbeispiel eingerichtet sind.
- Fig. 5: zeigt eine schematische Darstellung eines Systems aus mehreren Einheiten, die als Abschnitte mehrerer Computer implementiert sind und zur Durchführung eines vorgeschlagenen Authentisierungsverfahrens gemäß einem zweiten Ausführungsbeispiel eingerichtet sind.
- Fig. 6: zeigt eine schematische Darstellung eines Systems aus mehreren Einheiten, die als Abschnitte mehrerer Computer implementiert sind und zur Durchführung eines vorgeschlagenen Authentisierungsverfahrens gemäß einem dritten Ausführungsbeispiel eingerichtet sind.

In den Figuren sind gleiche oder funktionsgleiche Elemente mit denselben Bezugszeichen versehen, sofern nichts anderes angegeben ist. Die Verwendung nachgestellter Striche ' bzw. " bei im Übrigen gleichen Bezugszeichen kennzeichnet Ausgestaltungsvarianten gleicher bzw. funktionsgleicher Elemente gemäß unterschiedlichen Ausführungsbeispielen.

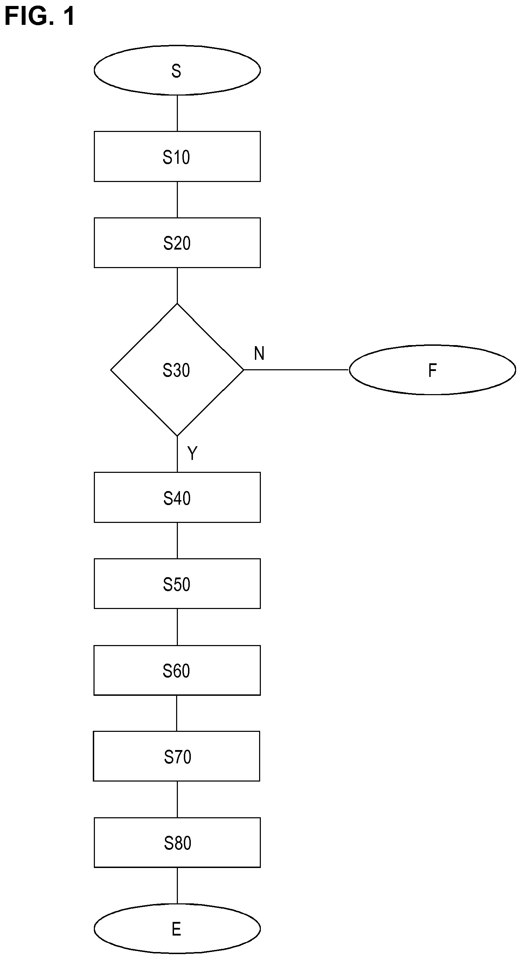

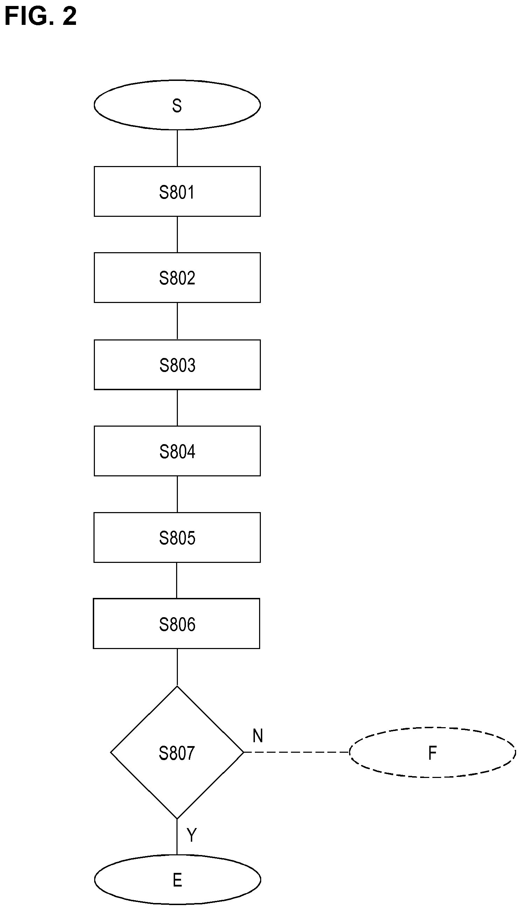

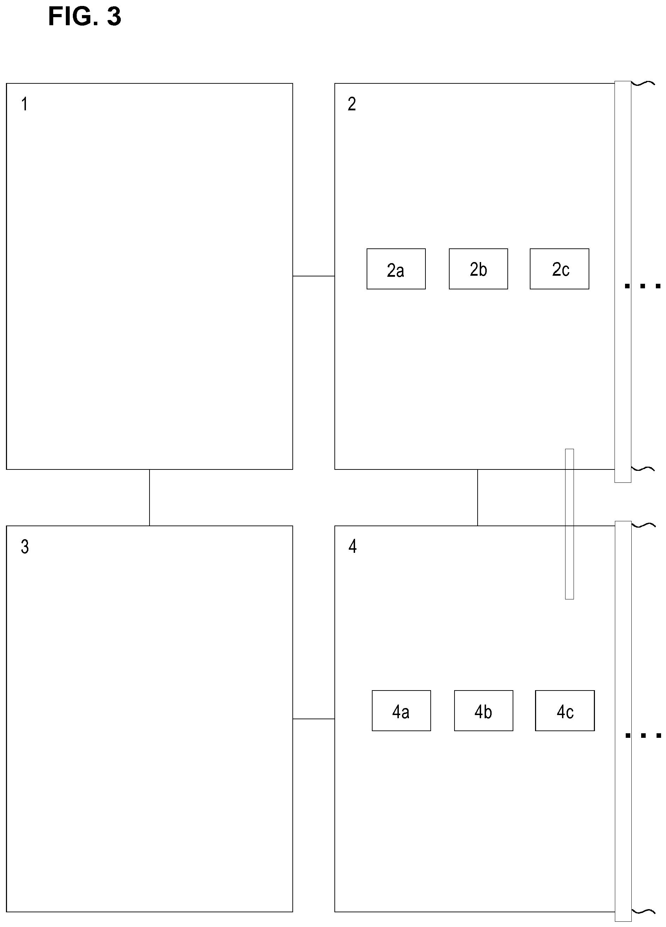

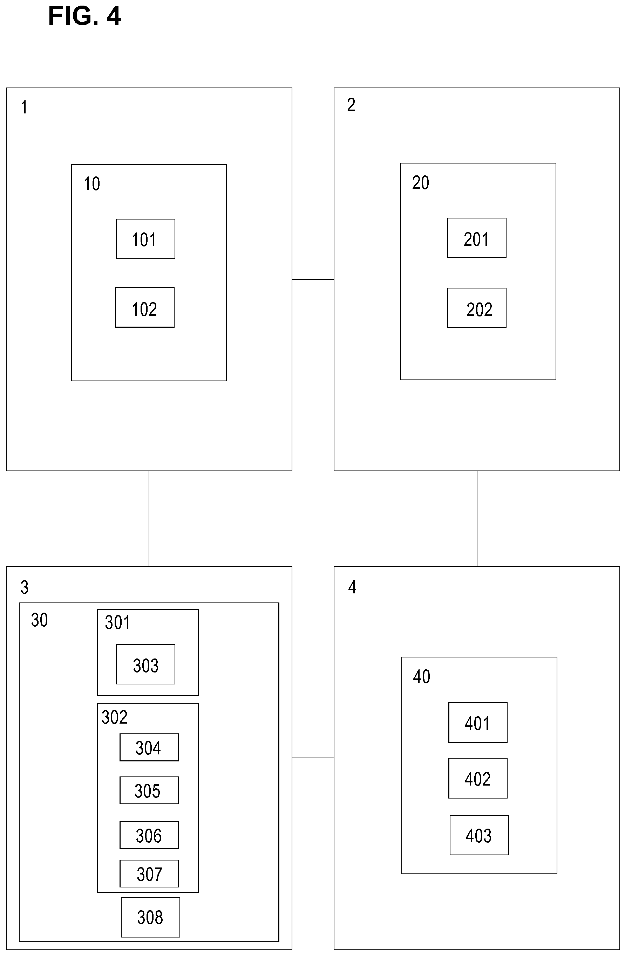

Im Weiteren wird ein erstes Ausführungsbeispiel des vorgeschlagenen Authentisierungsverfahrens anhand der Fig. 1 bis 4 ausführlich beschrieben. Fig. 1 und Fig. 2 zeigen schematische Ablaufdiagramme des vorgeschlagenen Verfahrens, und Fig. 3 und Fig. 4 zeigen Anordnungen, die zum Durchführen des vorgeschlagenen Verfahrens gemäß dem ersten Ausführungsbeispiel eingerichtet sind.

Fig. 3 zeigt im Speziellen ein mehrbenutzerfähiges Netzwerk, das einen Domain-Controller 1, eine Vielzahl Server-Computer 2 (2a, 2b, 2c, ...), einen MFA-Server 3 und eine Vielzahl Client-Computer 4 (4a, 4b, 4c, ...) umfasst. Der Domain-Controller ist kommunikativ mit jedem der der Vielzahl Server-Computer 2 und mit dem MFA-Server 3 verbunden. Jeder der Vielzahl Client-Computer 4 ist kommunikativ mit dem MFA-Server 3 verbunden. Außerdem ist jeder der Vielzahl Client-Computer 4 jeweils kommunikativ mit einem oder mehreren der Vielzahl Server-Computer 4 verbunden.

Der Domain-Controller 1 des vorliegenden Ausführungsbeispiels ist ein Computer mit einem Microsoft Windows Server Betriebssystem und führt die Microsoft Active Directory Domänendienste aus.

Der MFA-Server 3 des vorliegenden Ausführungsbeispiels ist ein Computer mit einem Microsoft Windows Betriebssystem und führt einen Computerprogrammproduktteil aus, um mehrere der Schritte des Verfahrens gemäß einem ersten Ausführungsbeispiel zu implementieren.

Die Server-Computer 2 (2a, 2b, 2c, ...) sind Computer, die jeweils unterschiedliche Betriebssysteme ausführen können, jeweils Mitglied in der von dem Domain-Controller 1 bereitgestellten Active Directory Domäne und dadurch an eine zentrale Benutzerverwaltung des Domain-Controllers 1 gekoppelt sind und jeweils eine oder mehrere Zielserver-Einheiten implementieren, die jeweils eine oder mehrere Netzwerkressourcen bereitstellen.

Die Client-Computer 4 (4a, 4b, 4c, ...) sind jeweils Computer und/oder Mobilgeräte, die jeweils unterschiedliche Betriebssysteme ausführen können und dazu eingerichtet sind, einem jeweiligen Benutzer Zugriff auf die von einem oder mehreren der Server-Computer 2 bereitgestellten Netzwerkressourcen zu ermöglichen und mindestens einen der Schritte gemäß dem vorgeschlagenen Verfahren auszuführen.

Fig. 4 zeigt eine Anordnung mit einem Domain-Controller 1, einem Server-Computer 2, einem MFA-Server 3 und einem Client-Computer 4, die zum Durchführen des Verfahrens gemäß dem ersten Ausführungsbeispiel eingerichtet sind, in größerem Detail.

Wie in Fig. 4 zu sehen, weist der Domain-Controller 1 eine zentrale Benutzerverwaltung 10 auf, die durch die von dem Domain-Controller 1 ausgeführten Microsoft Active Directory Domänendienste implementiert ist und als Verzeichnisdienst 101 die Microsoft Active Directory Directory Services sowie als Zertifizierungsstelle (CA, Certificate Authority) 102 die Microsoft Active Directory Certificate Services umfasst. Der Verzeichnisdienst 101 unterstützt insbesondere ein zertifikatbasiertes Authentifizierungsverfahren und ist dazu eingerichtet, im Rahmen des zertifikatbasierten Authentifizierungsverfahrens Zertifikate, die von der Zertifizierungsstelle 102 mittels des Stammzertifikats der Domäne mit einer gültigen Signatur versehen sind, als gültig zu erkennen.

Der Server-Computer 2 gemäß dem ersten Ausführungsbeispiel ist ein Remote Desktop (RD) Session Host, der ein Microsoft Windows Server Betriebssystem ausführt und eine Zielserver-Einheit 20 implementiert, die als Serverdienst Remotedesktopdienste, d.h. die entfernte Anmeldung an einer auf dem RD Session Host ausgeführten interaktiven Sitzung, bereitstellt. Der RD Session Host 2 ist Mitglied der von dem Domain-Controller 1 bereitgestellten Active Directory Domäne und dadurch an die zentrale Benutzerverwaltung 10 des Domain-Controllers 1 gekoppelt. Wie in Fig. 4 gezeigt ist, umfasst die Zielserver-Einheit 20 ein zweites Authentisierungsmittel 201 und eine Ressource 202. Das zweite Authentisierungsmittel 201 ist durch das Sicherheits-Subsystem des RD Session Hosts 2 implementiert, welches zur Authentisierung von Benutzern mit der zentralen Benutzerverwaltung 10 des Domain-Controllers 1 kommuniziert und sich in einer Vertrauensstellung mit der Zertifizierungsstelle 102 befindet. Die Zielserver-Einheit 20 in Fig. 4 unterstützt das Microsoft NLA-Protokoll (Network Level Access) und dabei insbesondere ein zertifikatbasiertes Authentifizierungsverfahren. Benutzern, die von dem zweiten Authentisierungsmittel 201 authentisiert werden, wird von der Zielserver-Einheit 20 Zugang zu der Ressource 202, d.h. einer auf dem RD Session Host 2 mit den Rechten des jeweiligen authentisierten Benutzers ausgeführten interaktiven Sitzung, gewährt. Die interaktive Sitzung wird dabei erst gestartet, wenn ein jeweiliger Benutzer erfolgreich authentisiert wurde.

Der MFA-Server 3 gemäß dem ersten Ausführungsbeispiel ist ein Computer mit einem beliebigen Betriebssystem, beispielsweise Microsoft Windows Server, der ein oder mehrere vorgeschlagene Programmproduktteile ausführt, die bewirken, dass der MFA-Server 3 eine MFA-Einheit 30 gemäß dem Verfahren des ersten Ausführungsbeispiels implementiert. Die MFA-Einheit 30 weist ein Mehrfaktor-Servermittel 301, ein Zertifikatservermittel 302 und ein drittes Authentisierungsmittel 308 auf. Das Mehrfaktor-Servermittel 301 umfasst eine dritte Einheit 303, und das Zertifikatservermittel 302 umfasst eine vierte Einheit 304, eine fünfte Einheit 305, eine sechste Einheit 306 und eine siebte Einheit 307.

Der Client-Computer 4 gemäß dem ersten Ausführungsbeispiel ist ein Arbeitsplatzrechner mit einem Microsoft Windows Betriebssystem, der insbesondere ein oder mehrere vorgeschlagene Programmproduktteile ausführt, die bewirken, dass der Client-Computer 4 eine Client-Einheit 40 gemäß dem Verfahren des ersten Ausführungsbeispiels implementiert. Die Client-Einheit 40 umfasst eine erste Einheit 401, eine zweite Einheit 402 und ein erstes Authentisierungsmittel 403.

Die Client-Einheit 40 des Client-Computers 4 gemäß dem ersten Ausführungsbeispiel umfasst einen oder mehrere Computerprogrammproduktteile mit Programmcode, der gegenüber dem Betriebssystem des Client-Computers 4 das Verhalten einer in ein Smartcard-Lesegerät eingelegten Smartcard nachbildet und beispielsweise (nicht gezeigt) einen virtuellen Smartcard-Lesegerät-Treiber und einen virtuellen Smartcard-Minitreiber umfasst.

Das Verfahren gemäß dem ersten Ausführungsbeispiel wird nun anhand von Fig. 1 beschrieben.

Als vorbereitender Schritt (nicht dargestellt) werden zunächst Benutzerdatensätze im Verzeichnisdienst 101 des Domain-Controllers 1 provisioniert, d.h. angelegt. Neben den bekannten Abläufen zum Provisionieren von Benutzerdatensatzes im Benutzerverzeichnis des Active Directory Verzeichnisdiensts 101 der Benutzerverwaltung 10 umfasst das Provisionieren gemäß dem Verfahren des ersten Ausführungsbeispiels für jeden provisionierten Benutzerdatensatz das Speichern einer PIN (Personal Identification Number) als Referenz-PIN sowie eines Geheimnisses bzw. eines geheimen Seedwerts zum Ableiten von Einmalpasswörtern (OTP - One Time Password) als Referenz-Seedwert in dem Benutzerdatensatz sowie das Deaktivieren der Funktionalität zur kennwortbasierten Authentisierung der Benutzerverwaltung 10. Die Referenz-PIN und der Referenz-Seedwert werden dabei durch Setzen von Zugriffskontrolllisten (ACL) auf solche Weise in dem Benutzerdatensatz gespeichert, dass sie nur von der Mehrfaktor-Einheit 30 ausgelesen werden können. Die jeweilige PIN wird dem jeweiligen Benutzer, dessen Benutzerdatensatz provisioniert wurde, mitgeteilt, und der jeweilige Seedwert wird in einem jeweiligen Token eines jeweiligen Benutzers hinterlegt. Bei dem Token kann es sich um ein Hardware-Token oder beispielsweise um ein durch Ausführen der Google Authenticator App auf einem Mobilgerät im Besitz des jeweiligen Benutzers implementiertes Token handeln. Die beschriebenen vorbereitenden Schritte können mit Mitteln der zentralen Benutzerverwaltung 10 und/oder mit Mitteln einer (nicht gezeigten) Provisionierungs-Einheit der Mehrfaktor-Einheit 30 erfolgen.

Der in Fig. 1 veranschaulichte Verfahrensabschnitt beginnt bei S (S = START) in Fig. 1, wenn ein Benutzer des Client-Computers 4 eine RDP-Client-Software (Abschnitt einer Client-Einheit 40) startet und versucht, sich mittels NLA mit dem RD Session Host 2 zu verbinden. Der RD Session Host 2 fordert die Client-Einheit 40 des Client-Computers 4 auf, die Identität des Benutzers nachzuweisen.

In Schritt S10 werden Anmeldedaten des Benutzers eingelesen. Im Speziellen wird auf einem nicht dargestellten Bildschirm eine Anmelde-Benutzerschnittstelle angezeigt. Der Smartcard-Minitreiber, der einen Abschnitt der Client-Einheit 40 implementiert, bewirkt in Kombination mit dem Smartcard-Lesegerät-Treiber, dass das Betriebssystem des Client-Computers 4 eine (tatsächlich nicht vorhandene) eingelegte Smartcard erkennt, und bietet diese dem Benutzer als Mittel zur Authentisierung an. Das von der Client-Einheit 40 implementierte Anmelde-Benutzerschnittstellen-Plug-In sorgt dabei dafür, dass dem Benutzer anstelle eines Symbols für eine Smartcard ein Symbol angezeigt wird, das die Möglichkeit zur Authentisierung mittels mehrerer Faktoren andeutet. Wählt der Benutzer das Symbol, zeigt das Anmelde-Benutzerschnittstellen-Plug-In einen Anmeldedialog an, in dem der Benutzer zur Eingabe von Anmeldedaten, im Speziellen einer Benutzerkennung und im vorliegenden Ausführungsbeispiel zweier Faktoren, einer PIN als ein Beispiel eines Faktors der Klasse Wissen und eines OTP als ein Beispiel eines Faktors der Klasse Besitz, aufgefordert wird. Der Benutzer gibt seine Benutzerkennung, die ihm bekannte PIN und das von seinem Token angezeigte OTP ein. Das Betriebssystem der Client-Einheit 40 stellt fest, dass eine zertifikatbasierte Authentisierung per Smartcard gewählt wurde, stellt die eingegebenen Anmeldedaten dem von der Client-Einheit 10 umfassten Smartcard-Minitreiber bereit und fordert von dem Smartcard-Minitreiber die Rückgabe eines Zertifikats an. Die erste Einheit 401 der Client-Einheit 40 liest auf diese Weise die eingegebenen Benutzerdaten ein.

In Schritt S20 überträgt die zweite Einheit 402 der Client-Einheit 40, die als Programmcodeabschnitt des Smartcard-Minitreibers implementiert ist, die eingelesenen Eingabedaten an das Mehrfaktor-Servermittel 301 der Mehrfaktor-Einheit 30.

In Schritt S30 verifiziert die dritte Einheit 303 des Mehrfaktor-Servermittels 301 der Mehrfaktoreinheit 30 die übertragenen Anmeldedaten. Im Speziellen kommuniziert die dritte Einheit 303 mit dem Active Directory Verzeichnis dienst 101 der zentralen Benutzerverwaltung 10, um einen Benutzerdatensatz abzurufen, der der in den übertragenen Anmeldedaten umfassten Benutzerkennung des Benutzers (im Weiteren: "Benutzerkennung") zugeordnet ist. Schlägt das Abrufen fehl, weil dem Verzeichnisdienst 101 die Benutzerkennung nicht bekannt ist (N in S30 in Fig.1), endet das Verfahren mit einem Fehler F, ohne dass der Benutzer authentisiert wird. Andernfalls empfängt die dritte Einheit 303 den Benutzerdatensatz oder Abschnitte des Benutzerdatensatzes von dem Verzeichnisdienst 101. Sodann vergleicht die dritte Einheit 303 die in den übertragenen Anmeldedaten umfasste PIN mit der in dem Benutzerdatensatz hinterlegten Referenz-PIN. Stimmen PIN und Referenz-PIN nicht überein (N in S30 in Fig.1), endet das Verfahren mit einem Fehler F. Ferner berechnet die dritte Einheit 303 der Mehrfaktor-Einheit 30 unter Verwendung eines vorbestimmten Pseudozufallszahlengenerator-Algorithmus anhand des in dem Benutzerdatensatz hinterlegten Referenz-Seedwert und der aktuellen Systemzeit ein Referenz-OTP und vergleicht dieses mit dem in den übertragenen Anmeldedaten umfassten OTP. Stimmen OTP und Referenz-OTP nicht überein (N in S30 in Fig.1), endet das Verfahren mit einem Fehler F. Andernfalls (Y in S30 in Fig. 1) wird das Verfahren mit Schritt S40 fortgesetzt.

Es sei angemerkt, dass in Schritt S30 die übertragenen Anmeldedaten anstelle der PIN und/oder des OTP auch kryptographische Derivate, wie Hashwerte der PIN und/oder des OTP, umfassen können, und die dritte Einheit 303 entsprechend Hashwerte der Referenz-PIN und/oder des Referenz-OTP berechnet (ableitet) und mit den übertragenen Hashwerten vergleichen kann. Auch könnte in Varianten anstelle eines der Faktoren oder zusätzlich zu den beiden beschriebenen Faktoren ein weiterer Faktor der Klasse Sein in den eingelesenen, übertragenen und verifizierten Anmeldedaten umfasst sein, wie beispielsweise ein Bild des Benutzers. Das Verifizieren in Schritt S30 umfasst in einer solchen Variante weiterhin das Vergleichen des übertragenen Bilds des Benutzers mit einem in dem Benutzerdatensatz hinterlegten Referenz-Bild des Benutzers im Hinblick auf hinreichende Ähnlichkeit unter Verwendung eines Gesichtserkennungsalgorithmus.

In Schritt S40 kommuniziert die vierte Einheit 304 in Reaktion auf das Verifizieren der mehreren Faktoren in Schritt S30 mit der Zertifizierungsstelle 102 der zentralen Benutzerverwaltung 101, um ein kurzlebiges Zertifikat anzufordern. Im Speziellen benutzt die vierte Einheit 304 die Windows-Zertifikatdienste, um mittels einer kryptographischen Operation ein Public-Private-Schüsselpaar aus einem öffentlichem und einem privaten Schüssel zu erstellen, um eine Zertifikatsignierungsanforderung zu erstellen, welche den öffentlichen Schüssel und Metadaten umfasst, und, um in den Metadaten eine gewünschte Gültigkeitsdauer von 10 Minuten für das angeforderte Zertifikat zu spezifizieren, und überträgt die Zertifikatsignierungsanforderung an die Zertifizierungsstelle 102 der zentralen Benutzerverwaltung 10 des Domain-Controllers 1.

In Schritt S50 empfängt die fünfte Einheit 305 der Mehrfaktor-Einheit 30 das angeforderte Zertifikat. Im Speziellen erstellt die Zertifizierungsstelle 102 der zentralen Benutzerverwaltung 10 in Reaktion auf das Übertragen der Zertifikatsignierungsanforderung aus Schritt S40 in Schritt S50 ein Zertifikat, welches den öffentlichen Schüssel und die Metadaten der in Schritt S40 übertragenen Zertifikatsignierungsanforderung umfasst, versieht das Zertifikat unter Verwendung des dem Stammzertifikat der Zertifizierungsstelle 102 zugeordneten privaten Schlüssels mit einer Signatur und überträgt das signierte Zertifikat an die fünfte Einheit 305 der Mehrfaktor-Einheit 30, und die fünfte Einheit 305 der Mehrfaktor-Einheit 30 empfängt das übertragene Zertifikat.

In Varianten des ersten Ausführungsbeispiels kann die Mehrfaktor-Einheit 30 anstelle eines Zertifikats mit einer Gültigkeitsdauer von 10 Minuten ein sogenanntes Einmalzertifikat anfordern, und die Zertifizierungsstelle 102 kann ein entsprechendes Einmalzertifikat erstellen und übertragen. Bei einem Einmalzertifikat handelt es sich um ein Zertifikat, welches ein Kennzeichen umfasst, das bewirkt, dass das Einmalzertifikat nach seiner einmaligen Verwendung zum Authentisieren eines Benutzers durch die Authentisierungseinheit (201, 308, 403) seine Gültigkeit verliert.

In Schritt S60 speichert die sechste Einheit 306 der Mehrfaktor-Einheit 30 den in Schritt S40 erzeugten privaten Schlüssel verknüpft mit dem in Schritt S50 empfangenen Zertifikat in einem (nicht dargestellten) Speichermittel der Mehrfaktor-Einheit 30.

In Schritt S70 überträgt die siebte Einheit 307 der Mehrfaktor-Einheit 30 ausschließlich den öffentlichen Abschnitt des Zertifikats an die Client-Einheit 40, wobei der private Schlüssel in dem Speichermittel der Mehrfaktor-Einheit 30 gespeichert bleibt. Auf diese Weise gelangt die Client-Einheit 40 an das in Schritt S10 vom Betriebssystem des Client-Computers 4 angeforderte Zertifikat.

In Schritt S80 wird der Benutzer durch die im vorliegenden Ausführungsbeispiel aus dem ersten Authentisierungsmittel 403, dem zweiten Authentisierungsmittel 201 und dem dritten Authentisierungsmittel 308 gebildeten Authentisierungs-Einheit unter Verwendung des an die Client-Einheit 40 übertragenen Zertifikats und des in dem Speichermittel der Mehrfaktor-Einheit 30 gespeicherten privaten Schlüssels gemäß dem zertifikatbasierten Authentisierungsverfahren authentisiert, wobei für die Kommunikation zwischen der Client-Einheit 40 und der Zielserver-Einheit 20 des RD Session Hosts 2 das NLA-Protokoll benutzt wird.

Fig. 2 zeigt Details der Abläufe bei dem Schritt S80 des Authentisierens aus Fig. 1.

In der nachstehenden Beschreibung wird zur Vereinfachung des Verständnisses das erste Authentisierungsmittel 403 als erstes Authentisierungsmittel 403 der Client-Einheit 40 bezeichnet, das zweite Authentisierungsmittel 201 wird als zweites Authentisierungsmittel 201 der Zielserver-Einheit 20 bezeichnet und das dritte Authentisierungsmittel 308 wird als drittes Authentisierungsmittel 308 der Mehrfaktor-Einheit 30 bezeichnet, da die jeweiligen Mittel gemäß dem ersten Ausführungsbeispiel von den jeweiligen Einheiten 40, 20, 30 umfasst sind. Es sei jedoch angemerkt, dass das erste Authentisierungsmittel 403, das zweite Authentisierungsmittel 201 und das dritte Authentisierungsmittel 308 eine Authentisierungs-Einheit bilden. Weiterhin umfasst gemäß dem vorliegenden Ausführungsbeispiel das zweite Authentisierungsmittel 201 der Zielserver-Einheit 20 Routinen des Betriebssystems oder der Server-Software des Zielserver-Computers bzw. RD Session Hosts 2, und das erste Authentisierungsmittel 403 der Client-Einheit 40 umfasst Routinen des Betriebssystems des Client-Computers 4 sowie Abschnitte des Smartcard-Minitreibers der Client-Einheit 40.

In Schritt S801 überträgt das erste Authentisierungsmittel 403 der Client-Einheit 40 das in Schritt S70 von der Mehrfaktor-Einheit 30 an die Client-Einheit 40 übertragene Zertifikat (öffentlicher Abschnitt des Zertifikats bzw. öffentliches Zertifikat) an das zweite Authentisierungsmittel 201 der Zielserver-Einheit 20 des RD Session Hosts 2. Einfacher ausgedrückt, überträgt die Client-Einheit 40 das Zertifikat an die Zielserver-Einheit 20. Genauer gibt der Smartcard-Minitreiber das empfangene Zertifikat an das Betriebssystem des Client-Computers 4 zurück, und Routinen des Betriebssystems des Client-Computers 4 übertragen das Zertifikat an den Zielserver 20 des RD Session Hosts 2 auf dieselbe Weise, wie einen öffentlichen Teil eines auf einer Smartcard gespeicherten Zertifikats. Mit anderen Worten sind die Mehrfaktor-Einheit 30 und die von dem Smartcard-Minitreiber durchgeführte Kommunikation mit Einheiten der Mehrfaktor-Einheit 40 für die Routinen des Betriebssystems des Client-Computers 4 transparent.

In Schritt 802 empfängt das erste Authentisierungsmittel 403 der Client-Einheit 40 eine Aufgabe von der Zielserver-Einheit 20. Die Aufgabe umfasst einen nicht verschlüsselten ersten Hashwert und einen mit dem öffentlichen Schlüssel des in Schritt S801 übertragenen Zertifikats erstellte verschlüsselte Form eines zweiten Hashwerts.

Im Speziellen empfangen Routinen des Betriebssystems des Client-Computers 4 eine Aufgabe von dem zweiten Authentisierungsmittel 201 der Zielserver-Einheit 20, übergeben die empfangene Aufgabe an den Smartcard-Minitreiber, und fordern die Rückgabe einer Lösung der Aufgabe an, da im Falle des Vorhandenseins einer Smartcard die Lösung der Aufgabe von der Steuereinrichtung der Smartcard unter Verwendung des auf der Smartcard gespeicherten privaten Schlüssels ermittelt werden würde.

In Schritt S803 überträgt das durch den Smartcard-Minitreiber ausgebildete erste Authentisierungsmittel 403 der Client-Einheit 40 die Aufgabe verknüpft mit der Benutzerkennung und/oder dem Zertifikat an das dritte Authentisierungsmittel 308 der Mehrfaktor-Einheit 30.

In Schritt S804 ermittelt das dritte Authentisierungsmittel 308 der Mehrfaktor-Einheit 30 die Lösung der Aufgabe, wobei es unter Verwendung des in dem Speichermittel der Mehrfaktor-Einheit 30 gespeicherten privaten Schlüssels, der der Benutzerkennung bzw. dem Zertifikat zugeordnet ist, gemäß einem Public-Private-Kryptographieverfahren den ersten Hashwert mit einer Signatur versieht und den verschlüsselten zweiten Hashwert entschlüsselt.

In Schritt S805 übertragt das zweite Authentisierungsmittel 308 der Mehrfaktor-Einheit 30 den mit der Signatur versehenen ersten Hashwert und die entschlüsselte verschlüsselte Form des zweiten Hashwerts als Lösung der Aufgabe an das erste Authentisierungsmittel 403 der Client-Einheit 40. Im Speziellen wird die Lösung an den Smartcard-Minitreiber übertragen, und der Smartcard-Minitreiber übergibt die Lösung an Routinen des Betriebssystems des Client-Computers 4.

In Schritt S806 überträgt die Client-Einheit 40 die Lösung an die Zielserver-Einheit 20. Die Übertragung erfolgt durch Routinen der Betriebssysteme des Client-Computers 4 bzw. des Server-Computers 2 auf gleiche Weise wie die Übertragung einer Lösung erfolgen würde, die mit dem privaten Schlüssel eines auf einer physikalischen Smartcard hinterlegten Zertifikats ermittelt wurde.

In Schritt S807 überprüft das zweite Authentisierungsmittel 201 der Zielserver-Einheit 20 des RD Session Hosts 2 die Lösung. Das Überprüfen erfolgt durch Vergleichen der entschlüsselten verschlüsselten Form des zweiten Hashwerts mit dem ursprünglichen zweiten Hashwert, durch Überprüfen der Echtheit der Signatur des mit einer Signatur versehenen ersten Hashwerts anhand eines Public-Private-Kryptographieverfahrens unter Verwendung des öffentlichen Schlüssels aus dem in Schritt S801 übertragenen Zertifikat, und durch Prüfen der Echtheit der Signatur der Zertifizierungsstelle 201, mit welcher das in Schritt S801 übertragene Zertifikat versehen ist, anhand des öffentlichen Schlüssels des Stammzertifikats, welches aufgrund der Vertrauensstellung mit der Zertifizierungsstelle 102 bekannt ist, wobei die Vertrauensstellung aufgrund der Kopplung an die zentrale Benutzerverwaltung 10 besteht. Es sei angemerkt, dass in einer Variante das Überprüfen von dem zweiten Authentifizierungsmittel 201 der Zielserver-Einheit 20 durchgeführt werden kann. In einer anderen Variante kann das Überprüfen durchgeführt werden, indem das zweite Authentifizierungsmittel 201 der Zielserver-Einheit 20 mit dem Verzeichnisdienst 101 der zentralen Benutzerverwaltung 10 kommuniziert und den Verzeichnisdienst zum Durchführen der vorstehend beschriebenen Schritte veranlasst, wobei nacheinander das Zertifikat, die Aufgabe, die Lösung und ein Ergebnis der Überprüfung übertragen werden. Schlägt einer der Schritte des Überprüfens fehl (N bei Schritt 807 in Fig. 2), endet das Verfahren mit einem Fehler F. Andernfalls (Y bei Schritt 807 in Fig. 2) ist der Benutzer erfolgreich authentisiert und das Verfahren endet (E in Fig. 2).

Es sei angemerkt, dass in einem weiteren Schritt die Autorisierung des Benutzers überprüft wird, wobei die Zielserver-Einheit 20 prüft, ob im Benutzerdatensatz des durch das Zertifikat bezeichneten Benutzers ausreichende Berechtigungen für die angefragte Ressource hinterlegt sind.

Falls sowohl die vorstehend im Detail beschriebene Authentisierung als auch die anschließende Autorisierung erfolgreich waren, startet die Zielserver-Einheit 20 auf dem RD Session Host 2 eine interaktive Sitzung und überträgt ein Login-Token an die Client-Einheit 10.

Der authentisierte Benutzer hat nun Zugriff auf die von der Zielserver-Einheit 20 bereitgestellte Ressource, im Speziellen auf die entfernt auf dem RD Session Host 2 ausgeführte interaktive Sitzung, die erst nach erfolgreicher Authentisierung und Autorisierung des Benutzers gestartet wurde.

Es sei angemerkt, dass das für die beschriebenen Schritte verwendete Zertifikat nicht länger benötigt wird und nach Ablauf seiner Gültigkeit verfällt. Sofern es sich bei dem Zertifikat um ein Einmalzertifikat handelt, verfällt es sofort als Reaktion auf das Überprüfen in Schritt S807.

Es sei ferner angemerkt, dass der Fall eines Fehlschlagens der Überprüfung der Lösung (N bei Schritt 807 in Fig. 2) in Fig. 2 mit gestrichelten Linien dargestellt ist, da er bei ordnungsgemäßer Funktion der in Fig. 4 gezeigten Anordnung nie auftreten sollte. Gibt ein Benutzer nämlich falsche Anmeldedaten ein, scheitert der Authentisierungsversuch bereits bei Schritt S30. Andernfalls wird, sofern keine Fehlfunktionen auftreten, der Benutzer immer erfolgreich authentisiert, da die Mehrfaktor-Einheit 30 die Lösung der Aufgabe des in der Mehrfaktor-Einheit 30 gespeicherten privaten Schlüssels erstellt, der dem öffentlichen Schlüssel zugeordnet ist, anhand dessen die von der Zielserver-Einheit 20 übertragene Aufgabe erstellt wurde.

Auf diese Weise implementiert das Verfahren des ersten Ausführungsbeispiels die Authentisierung eines Benutzers einer Client-Einheit 40 eines Client-Computers 4 gegenüber einer Zielserver-Einheit 20 eines RD Session Host 2, der mit einem Domain-Controller 1 gekoppelt ist, unter Verwendung eines sicheren zertifikatbasierten Authentisierungsverfahrens, wobei die Sicherheit weiterhin dadurch verbessert ist, dass einerseits die sicherheitsrelevanten privaten Schlüssel, die den verwendeten Zertifikaten zugeordnet sind, dem Verantwortungsbereich des Benutzers vorenthalten werden, indem sie auf der beispielsweise dem Benutzer nicht zugänglichen Mehrfaktor-Einheit 30 gespeichert bleiben, und andererseits der Benutzer seine Identität ausschließlich mittels eines Mehrfaktor-Authentisierungsverfahrens nachweist, wobei keiner der Faktoren das Windows Anmeldekennwort ist, so dass die unsichere Funktionalität zur Authentisierung mittels Windows-Anmeldekennwort deaktiviert werden kann. Zudem sind keine Smartcards erforderlich, was Verwaltungskosten und -aufwand reduziert, und die vorteilhaften Effekte einer höheren Sicherheit, einfacheren Verwaltung und Kostensenkung durch das Mehrfaktor-Authentisierungsverfahren können in dem vorliegenden Anwendungsbeispiel durch Bereitstellung einer Mehrfaktor-Einheit 30 sowie eines auf dem Client-Computer 4 installierbaren Smartcard-Treibers erreicht werden, ohne dass Modifikationen an dem nicht quelloffenen Microsoft Windows Betriebssystemkomponenten des RD Session Hosts 2, des Client-Computers 4 oder des Domain-Controllers 1 erforderlich sind. Weiterhin können die Vorteile wie höhere Geschwindigkeit und größere Sicherheit des NLA-Protokolls genutzt werden, obwohl ein Mehrfaktor-Authentisierungsverfahren eingesetzt wird, welches von dem NLA-Protokoll nicht unterstützt wird.

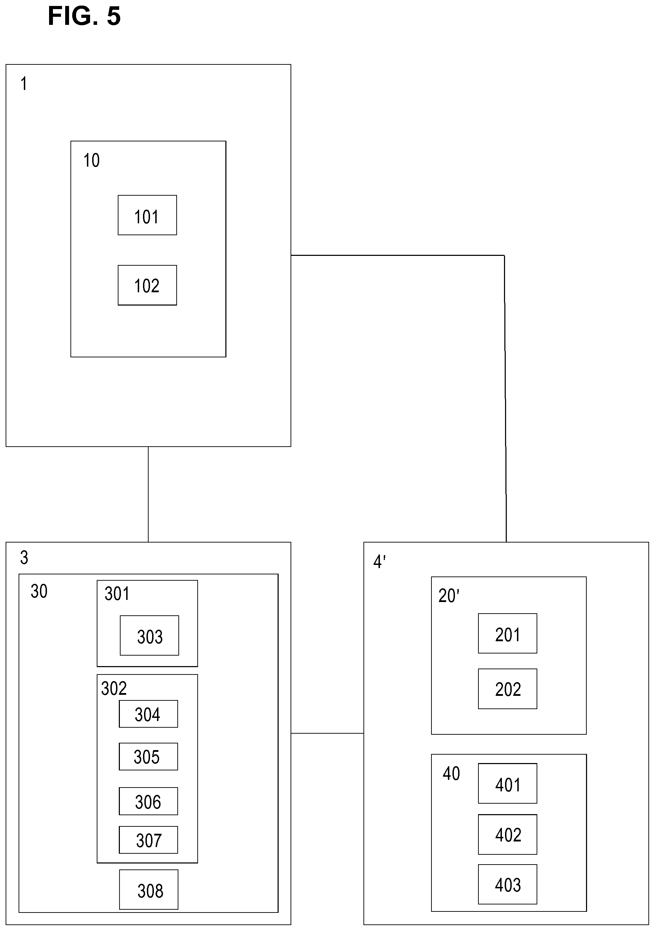

Fig. 5 zeigt eine Anordnung mit einem Domain-Controller 1, einem MFA-Server 3 und einem Client-Computer 4', die zum Durchführen eines Verfahrens gemäß einem zweiten Ausführungsbeispiel eingerichtet sind.

Bei dem Verfahren gemäß dem zweiten Ausführungsbeispiel handelt es sich bei der Zielserver-Einheit 20' um das lokale Sicherheits-Subsystem des Client-Computers 4', und die Zielserver-Einheit 20' ist entsprechend durch Programmcodeabschnitte des Betriebssystems des Client-Computers 4' implementiert, die anders als bei dem ersten Anwendungsbeispiel auf dem Client-Computer 4' ausgeführt werden und einen lokalen Anmeldedienst bereitstellen. Das lokale Sicherheits-Subsystem 20' des Client-Computers 4' ist mit der zentralen Benutzerverwaltung 10 gekoppelt.

Das Verfahren gemäß dem zweiten Ausführungsbeispiel beginnt, wenn ein Benutzer versucht, sich lokal an dem Client-Computer 4' anzumelden.

Im Übrigen läuft das Verfahren gemäß dem zweiten Ausführungsbeispiel nach denselben bereits anhand von Fig. 1 beschriebenen Schritten des ersten Ausführungsbeispiels ab, und Einheiten in Fig. 5, die gleiche Bezugszeichen wie in Fig. 4 tragen, weisen gleiche Funktionen auf.

Wird der Benutzer am Ende des Verfahrens gegenüber der Zielserver-Einheit, d.h. dem lokalen Sicherheits-Subsystem 20', authentisiert, erhält er bei ausreichender Autorisierung Zugriff auf eine interaktive Sitzung auf dem Client-Computer 4'.

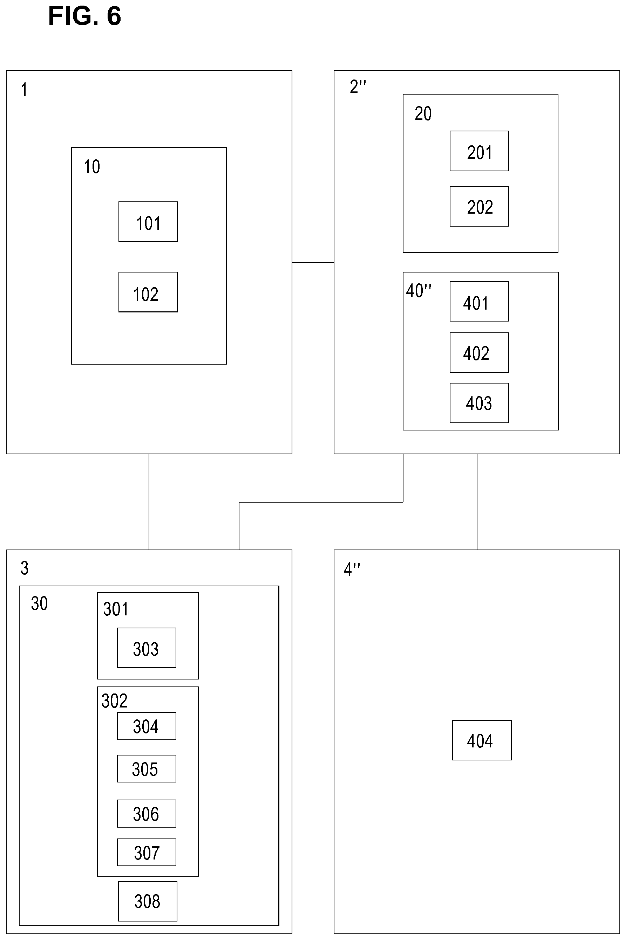

Fig. 6 zeigt eine Anordnung mit einem Domain-Controller 1, einem Server-Computer 2", einem MFA-Server 3 und einem Client-Computer 4", die zum Durchführen des Verfahrens gemäß einem dritten Ausführungsbeispiel eingerichtet sind.

In Fig. 6 handelt es sich bei dem Server-Computer 2" um einen Webserver mit einem Microsoft Windows Betriebssystem, der eine Version der Microsoft Internet Information Services (IIS) ausführt und eine Zielserver-Einheit 20 implementiert, die als Serverdienst einen webbasierten Dienst 202, wie eine Applikation oder eine Website, per HTTP-Protokoll bereitstellt, und bei dem Client-Computer 4" handelt es sich um einen Client-Computer oder einen Thin-Client, auf dem ein Webbrowser 404 ausgeführt wird. Der Webserver 2" ist mit der zentralen Benutzerverwaltung 10 des Domain-Controllers 1 gekoppelt und ferner kommunikativ mit dem MFA-Server 3 verbunden.

Bei dem Verfahren gemäß dem dritten Ausführungsbeispiel sind die Client-Einheit 40" und die Einheiten 401", 402", 403" der Client-Einheit 40" als Programmcode implementiert, der von einem Server-Computer 2", d.h. dem Webserver 2" ausgeführt wird. Abschnitte der Client-Einheit 40" sind als Proxy-Programmcode ausgebildet, der Datenübertragungen zwischen dem entfernten Client-Computer 4" und dem Webserver 2" abfängt, mindestens abschnittsweise modifiziert und weiterleitet.

Das Verfahren gemäß dem dritten Ausführungsbeispiel beginnt, wenn der Benutzer mit dem Webbrowser die HTTP-Adresse des Webservers 2" besucht. Der Proxy-Programmcode fängt Datenübertragungen zwischen dem Webserver 2" und dem Client-Computer 4" ab und filtert mindestens Abschnitte davon derart, dass der Webbrowser 404 des Client-Computers 4" einen Anmeldedialog anzeigt, mit dem eine Benutzerkennung und mehrere Faktoren eingelesen werden, und ferner derart, dass der Zielserver-Einheit 20 des Webservers 2" gegenüber das Verhalten eines Client-Computers 4" nachgebildet wird, an den ein Smartcard-Lesegerät angeschlossen ist, in das eine Smartcard eingelegt und aktiviert ist.

Im Übrigen läuft das Verfahren gemäß dem dritten Ausführungsbeispiel analog zu dem Verfahren des ersten Ausführungsbeispiels ab, bis der Benutzer erfolgreich authentisiert ist, und in Fig. 6 weisen Einheiten, die gleiche Bezugszeichen wie in Fig. 4 tragen, gleichartige Funktionen auf.

Weiterhin erfolgt, wenn ein Benutzer erfolgreich authentisiert wurde, eine Datenübertragung zwischen dem Webserver 2" und dem Client-Computer 4", es wird jedoch kein Login-Token erstellt, da das HTTP-Protokoll keine entsprechenden Funktionen vorsieht. Aus diesem Grund wird bei jeder nachfolgenden Datenübertragung erneut ein Authentisierungsverfahren durchlaufen. Damit hierbei nicht jedes Mal erneut Anmeldedaten eingelesen und in Reaktion darauf Zertifikate angefordert und erstellt werden müssen, wird beim erstmaligen Durchführen des Verfahrens gemäß dem dritten Ausführungsbeispiel bei Schritt S40 vorzugsweise ein Zertifikat mit einer Gültigkeitsdauer angefordert, die einer erwarteten maximalen Dauer einer Websitzung von beispielsweise einer Stunde, 8 Stunden oder 24 Stunden entspricht, und bei darauffolgenden Datenübertragungen wird, solange in der Mehrfaktor-Einheit 30 noch ein gültiger (nicht abgelaufener) privater Schlüssel gespeichert ist, nur Schritt 80 des Verfahrens gemäß der dritten Ausführungsform durchgeführt.

Obwohl die vorliegende Erfindung anhand von Ausführungsbeispielen beschrieben wurde, ist sie vielfältig modifizierbar.

Die zentrale Benutzerverwaltung 10 ist in den Ausführungsbeispielen als eine Kombination aus den Active Directory Directory Services 101 und den Active Directory Certificate Services 102 beschrieben, es können jedoch auch ein anderer Verzeichnisdienst 101 und eine andere Zertifizierungsstelle 102 jeweils anderer, gleicher oder unterschiedlicher, Anbieter kombiniert werden, um die zentrale Benutzerverwaltung 10 auszubilden.

So kann es sich bei dem Server-Computer 2 um jeden beliebigen Server-Computer handeln, solange die jeweilige Zielserver-Einheit 20 ein zertifikatbasiertes Authentisierungsverfahren unterstützt. Beispielsweise kann es sich bei dem Server-Computer 2 auch um einen Dateiserver handeln, der das CIFS-Protokoll oder das FTP-Protokoll unterstützt, oder um einen Datenbankserver, der das SQL-Protokoll unterstützt.

Bei dem Client-Computer 4 kann es sich um einen Computer oder ein mobiles Endgerät mit einem beliebigen Betriebssystem handeln, insbesondere beispielsweise um einen Computer, der Mac OS X ausführt, oder um ein mobiles Endgerät, das iOS, Android oder Windows Mobile ausführt.

Ferner weisen die in den Fig. 4 bis 6 gezeigten Anordnungen einen MFA-Server 3, einen Domain-Controller 1 und (außer in Fig. 5) einen Server-Computer 2 auf, dies dient jedoch lediglich der besseren Veranschaulichung und stellt keine Einschränkung dar. Insbesondere kann es sich bei dem MFA-Server 3, dem Server-Computer 2 und dem Domain-Controller 1 auch um Module oder Programmcodeabschnitte ein- und desselben Server-Computers handeln, oder die Funktionen des MFA-Servers 3, des Domain-Controllers 1 und/oder des Server-Computers 2 können jeweils über einen oder mehrere Server-Computer verteilt sein.

Der einfacheren Beschreibung halber wurde das vorgeschlagene Verfahren anhand einer in Fig. 4 dargestellten Anordnung mit nur einem Server-Computer 2 und nur einem Client-Computer 4 beschrieben, dies stellt jedoch keine Einschränkung dar und es versteht sich, dass beliebig viele Server-Computer 2a, 2b, 2c, ... und Client-Computer 4a, 4b, 4c, ... Schritte des vorgeschlagenen Verfahrens ausführen können. Dabei können unterschiedliche der beschriebenen Ausführungsformen kombiniert werden, so könnte es sich bei einem Server-Computer 4a um einen RD Session Host, und bei einem Server-Computer 4b um einen IIS Server handeln, und auf den Client-Computern 4 können jeweils ein Verfahren gemäß dem zweiten Ausführungsbeispiel für die lokale Authentisierung, ein Verfahren gemäß dem ersten Ausführungsbeispiel für den Zugriff auf entfernte Remote-Desktop-Dienste und ein Verfahren gemäß dem dritten Ausführungsbeispiel für den Zugriff auf webbasierte Dienste kombiniert werden.

Vorliegend ist beschrieben, dass ein Benutzer seine Identität mittels eines Mehrfaktor-Authentisierungsverfahrens anhand einer Benutzerkennung und mehrerer Faktoren gegenüber einer Mehrfaktor-Einheit 30 nachweist und durch Schritte des vorgeschlagenen Verfahrens ohne eine erneute Eingabe von Anmeldedaten und ohne Verwendung physikalischer Smartcards gegenüber einer Zielserver-Einheit 20 authentisiert wird, die ein zertifikatbasiertes Authentisierungsverfahren unterstützt. Es sind jedoch auch Weiterbildungen angedacht, bei denen der Benutzer seine Identität mittels eines beliebigen bekannten oder noch zu entwickelnden Authentisierungsverfahrens gegenüber einer bereitzustellenden Einheit 30 nachweist und durch Schritte des vorgeschlagenen Verfahrens ohne eine erneute Eingabe von Anmeldedaten und ohne Verwendung von Smartcards gegenüber einer Zielserver-Einheit 20 authentisiert wird, die ein zertifikatbasiertes Authentisierungsverfahren unterstützt und das beliebige bekannte oder noch zu entwickelnde Authentisierungsverfahren nicht unterstützt.

Weitere Modifikationen und Kombinationen gehen für den Fachmann aus der vorliegenden Beschreibung, den Ansprüchen und den Figuren hervor.

### BEZUGSZEICHENLISTE

- 1: Domain-Controller
- 10: zentrale Benutzerverwaltung
- 101: Verzeichnisdienst
- 102: Zertifizierungsstelle
- 2: Server-Computer
- 2a, 2b, 2c: Server-Computer
- 20: Zielserver-Einheit
- 201: zweites Authentisierungsmittel
- 202: Ressource
- 3: MFA-Server
- 30: Mehrfaktor-Einheit
- 301: Mehrfaktor-Servermittel
- 302: Zertifikatservermittel
- 303: dritte Einheit
- 304: vierte Einheit
- 305: fünfte Einheit
- 306: sechste Einheit
- 307: siebte Einheit
- 308: drittes Authentisierungsmittel
- 4: Client-Computer
- 4a, 4b, 4c: Client-Computer
- 40: Client-Einheit
- 401: erste Einheit
- 402: zweite Einheit
- 403: erstes Authentisierungsmittel
- 404: Web-Browser
- S10: Einlesen von Anmeldedaten durch die Client-Einheit
- S20: Übertragen der Anmeldedaten an die Mehrfaktor-Einheit
- S30: Verifizieren der Anmeldedaten durch die Mehrfaktor-Einheit
- S40: Anfordern eines Zertifikats bei der zentralen Benutzerverwaltung
- S50: Empfangen des Zertifikats von der zentralen Benutzerverwaltung
- S60: Speichern des privaten Schlüssels in der Mehrfaktor-Einheit
- S70: Übertragen des Zertifikats an die Client-Einheit
- S80: Authentisieren des Benutzers unter Verwendung des in der Mehrfaktor-Einheit gespeicherten privaten Schlüssels
- S801: Übertragen des öffentlichen Teils an die Zielserver-Einheit
- S802: Empfangen einer Aufgabe von der Zielserver-Einheit
- S803: Übertragen der Aufgabe an die Mehrfaktor-Einheit
- S804: Ermitteln einer Lösung der Aufgabe durch die Mehrfaktor-Einheit
- S805: Übertragen der Lösung an die Client-Einheit
- S806: Übertragen der Lösung an die Zielserver-Einheit
- S807: Überprüfen der Lösung durch die Zielserver-Einheit
- S: Start
- E: Ende
- F: Fehler (Authentisierung fehlgeschlagen)

## Patentansprüche

1. Verfahren zur Authentisierung eines Benutzers gegenüber einer Zielserver-Einheit (20), die mit einer zentralen Benutzerverwaltung (10) gekoppelt ist, wobei die Zielserver-Einheit (20) und die zentrale Benutzerverwaltung (10) mindestens ein zertifikatbasiertes Authentisierungsverfahren unterstützen, mit folgenden Schritten:
a) Einlesen (S10) von Anmeldedaten des Benutzers durch eine Client-Einheit (40), wobei die Anmeldedaten eine Benutzerkennung und mehrere Faktoren umfassen,
b) Übertragen (S20) der eingelesen Anmeldedaten von der Client-Einheit (40) an eine Mehrfaktor-Einheit (30),
c) Verifizieren (S30) der übertragenen Anmeldedaten durch die Mehrfaktor-Einheit (30),
d) Anfordern (S40) eines Zertifikats durch die Mehrfaktor-Einheit (30) bei der zentralen Benutzerverwaltung (10) im Falle des erfolgreichen Verifizierens der Anmeldedaten,
e) Empfangen (S50) des angeforderten Zertifikats von der zentralen Benutzerverwaltung (10) durch die Mehrfaktor-Einheit (30),
f) Speichern (S60) eines dem Zertifikat zugeordneten privaten Schlüssels in der Mehrfaktor-Einheit (30),
g) Übertragen (S70) des Zertifikats von der Mehrfaktor-Einheit (30) an die Client-Einheit (40) und
h) Authentisieren (S80) des Benutzers gegenüber der Zielserver-Einheit (20) unter Verwendung des in der Client-Einheit (40) vorhandenen Zertifikats und des in der Mehrfaktor-Einheit (30) gespeicherten privaten Schlüssels des Zertifikats.

2. Verfahren nach Anspruch 1,
**dadurch gekennzeichnet, dass**
der Schritt h) umfasst:
- Übertragen (S801) des Zertifikats von der Client-Einheit (40) an die Zielserver-Einheit (20),
- Empfangen (S802) einer Aufgabe, deren Lösung mindestens den privaten Schlüssel erfordert, durch die Client-Einheit (40) von der Zielserver-Einheit (20),
- Übertragen (S803) der Aufgabe von der Client-Einheit (40) an die Mehrfaktor-Einheit (30),
- Ermitteln (S804) einer Lösung der Aufgabe durch die Mehrfaktor-Einheit (30) unter Verwendung des in der Mehrfaktor-Einheit (30) gespeicherten privaten Schlüssels,
- Übertragen (S805) der ermittelten Lösung der Aufgabe von der Mehrfaktor-Einheit (30) an die Client-Einheit (40),
- Übertragen (S806) der ermittelten Lösung der Aufgabe von der Client-Einheit (40) an die Zielserver-Einheit (20) und
- Überprüfen (S807) der ermittelten Lösung der Aufgabe durch die Zielserver-Einheit (20).

3. Verfahren nach Anspruch 2,
**dadurch gekennzeichnet, dass**
die Aufgabe eine Datenfolge umfasst,
das Ermitteln der Lösung der Aufgabe ein Versehen der Datenfolge mit einer Signatur unter Verwendung des privaten Schlüssels umfasst,
die Lösung der Aufgabe die mit der Signatur versehene Datenfolge umfasst und
das Überprüfen der Lösung der Aufgabe ein Prüfen der Signatur der mit der Signatur versehenen Datenfolge umfasst,
und/oder
die Aufgabe eine verschlüsselte Form einer Datenfolge umfasst,
das Ermitteln der Lösung der Aufgabe ein Entschlüsseln der verschlüsselten Form der Datenfolge mittels des privaten Schlüssels umfasst,
die Lösung der Aufgabe die entschlüsselte verschlüsselte Form der Datenfolge umfasst und
das Überprüfen der Lösung der Aufgabe ein Vergleichen der entschlüsselten verschlüsselten Form der Datenfolge mit der Datenfolge umfasst.

4. Verfahren nach einem der Ansprüche 1 - 3,
**dadurch gekennzeichnet, dass**
der Schritt g) das Übertragen ausschließlich eines öffentlichen Abschnitts des Zertifikats von der Mehrfaktor-Einheit (30) an die Client-Einheit (40) umfasst,
wobei der private Schlüssel in der Mehrfaktor-Einheit (30) gespeichert bleibt.

5. Verfahren nach einem der Ansprüche 1 - 4,
**dadurch gekennzeichnet, dass**
die Zielserver-Einheit (20) als Programmcode implementiert ist, der auf einem Server-Computer (2, 2a, 2b, 2c) ausgeführt wird und einen Serverdienst bereitstellt.

6. Verfahren nach einem der Ansprüche 1 - 5,
**dadurch gekennzeichnet, dass**
die Zielserver-Einheit (20) als Programmcode implementiert ist, der auf einem Client-Computer (4, 4a, 4b, 4c) ausgeführt wird und einen lokalen Anmeldedienst bereitstellt.

7. Verfahren nach einem der Ansprüche 1 - 6,
**dadurch gekennzeichnet, dass**
die Client-Einheit (40) als Programmcode implementiert ist, der von einem Client-Computer (4, 4a, 4b, 4c) ausgeführt wird und gegenüber einem Betriebssystem des Client-Computers (4, 4a, 4b, 4c) das Verhalten einer Smartcard nachbildet.

8. Verfahren nach einem der Ansprüche 1 - 7,
**dadurch gekennzeichnet, dass**
die Client-Einheit (40) als Programmcode implementiert ist, der von einem Server-Computer (2, 2a, 2b, 2c) ausgeführt wird und mindestens während des Authentisierens Datenübertragungen zwischen einem entfernten Client-Computer (4, 4a, 4b, 4c) und dem Server-Computer (2, 2a, 2b, 2c) filtert.

9. Verfahren nach einem der Ansprüche 1 - 8,
**dadurch gekennzeichnet, dass**
ein jeder der mehreren Faktoren aus einer der Klassen Wissen, Besitz und Sein ausgewählt ist.

10. Verfahren nach einem der Ansprüche 1 - 9,
**dadurch gekennzeichnet, dass**
die zentrale Benutzerverwaltung (10) einen Verzeichnisdienst (101) und eine Zertifizierungsstelle (102) umfasst.

11. Verfahren nach Anspruch 10,
**dadurch gekennzeichnet, dass**
der Schritt c) umfasst:
- Vergleichen eines Faktors der mehreren in den von der Client-Einheit (40) an die Mehrfaktor-Einheit (20) übertragenen Anmeldedaten umfassten Faktoren oder aus dem Faktor abgeleiteter Daten mit einem in dem Verzeichnisdienst (101) der zentralen Benutzerverwaltung (10) bereitgestellten Referenz-Faktor oder mit aus dem Referenz-Faktor abgeleiteten Daten durch die Mehrfaktor-Einheit (30).

12. Verfahren nach Anspruch 10 oder 11,
**dadurch gekennzeichnet, dass**
einer der mehreren in den von der Client-Einheit (40) an die Mehrfaktor-Einheit (30) übertragenen Anmeldedaten umfassten Faktoren ein Einmalpasswort ist, das von einer im Besitz des Benutzers befindlichen Einrichtung angezeigt wird,
und der Schritt c) umfasst:
- Berechnen eines Vergleichswerts durch Ausführen einer Rechenoperation anhand eines im Verzeichnisdienst (101) der zentralen Benutzerverwaltung (10) bereitgestellten Seedwerts und eines von der Mehrfaktor-Einheit (30) durch eine Messung ermittelten Parameters durch die Mehrfaktor-Einheit (30) und
- Vergleichen des in den von der Client-Einheit (40) an die Mehrfaktor-Einheit (30) übertragenen Anmeldedaten umfassten Einmalpassworts mit dem von der Mehrfaktor-Einheit (30) berechneten Vergleichswert.

13. Verfahren nach einem der Ansprüche 10 - 12,
**dadurch gekennzeichnet, dass**
das Zertifikat als Reaktion auf das Anfordern eines Zertifikats durch die Mehrfaktor-Einheit (30) bei der zentralen Benutzerverwaltung (10) von der Zertifizierungsstelle (102) der zentralen Benutzerverwaltung (10) erstellt wird und
das Zertifikat eine Gültigkeitsdauer von höchstens 24 Stunden aufweist und/oder als Reaktion auf das Authentisieren des Benutzers seine Gültigkeit verliert.

14. Verfahren nach einem der Ansprüche 1 - 13,
**gekennzeichnet durch**
- Deaktivieren einer Funktionalität zur kennwortbasierten Authentisierung der Zielserver-Einheit (20) und/oder der zentralen Benutzerverwaltung (10).

15. Computerprogrammprodukt, welches einen oder mehrere Computerprogrammproduktteile umfasst, die auf mindestens einer programmgesteuerten Einrichtung die Durchführung eines Verfahrens nach einem der Ansprüche 1 bis 14 veranlassen.

16. System zur Authentisierung eines Benutzers gegenüber einer mit einer zentralen Benutzerverwaltung (10) gekoppelten Zielserver-Einheit (20) mit einer Client-Einheit (40), einer Mehrfaktor-Einheit (30) und einer Authentisierungs-Einheit (201, 308, 403), wobei die Zielserver-Einheit (20) und die zentrale Benutzerverwaltung (10) mindestens ein zertifikatbasiertes Authentisierungsverfahren unterstützen,
wobei die Client-Einheit (40) aufweist:
eine erste Einheit (401) zum Einlesen von Anmeldedaten des Benutzers, wobei die Anmeldedaten eine Benutzerkennung und mehrere Faktoren umfassen,
eine zweite Einheit (402) zum Übertragen der eingelesen Anmeldedaten von der Client-Einheit (40) an die Mehrfaktor-Einheit (30), und
wobei die Mehrfaktor-Einheit (30) aufweist:
eine dritte Einheit (303) zum Verifizieren der übertragenen Anmeldedaten,
eine vierte Einheit (304) zum Anfordern eines Zertifikats bei der zentralen Benutzerverwaltung (10) im Falle des erfolgreichen Verifizierens der Anmeldedaten,
eine fünfte Einheit (305) zum Empfangen des angeforderten Zertifikats von der zentralen Benutzerverwaltung (10),
eine sechste Einheit (306) zum Speichern eines dem Zertifikat zugeordneten privaten Schlüssels in der Mehrfaktor-Einheit (30), und
eine siebte Einheit (307) zum Übertragen des Zertifikats von der Mehrfaktor-Einheit (30) an die Client-Einheit (40),
wobei die Authentisierungs-Einheit (201, 308, 403) zum Authentisieren des Benutzers gegenüber der Zielserver-Einheit (20) unter Verwendung des in der Client-Einheit (40) vorhandenen Zertifikats und des in der Mehrfaktor-Einheit (30) gespeicherten privaten Schlüssels eingerichtet ist.
